(19) **Europäisches Patentamt / European Patent Office / Office européen des brevets**

(11) **EP 3 926 878 B1**

(12) # EUROPEAN PATENT SPECIFICATION

(45) Date of publication and mention
of the grant of the patent:
**03.12.2025 Bulletin 2025/49**

(21) Application number: **20779957.8**

(22) Date of filing: **26.03.2020**

(51) International Patent Classification (IPC):
**H04L 5/00** (2006.01)   **H04W 4/02** (2018.01)
**H04W 64/00** (2009.01)   **H04W 72/04** (2023.01)

(52) Cooperative Patent Classification (CPC):
**H04L 5/0007; H04L 5/005;** H04L 5/0039;
H04L 5/0041; H04L 5/0051

(86) International application number:
**PCT/CN2020/081348**

(87) International publication number:
**WO 2020/192723 (01.10.2020 Gazette 2020/40)**

(54) **TRANSMITTING AND RECEIVING METHODS AND DEVICES FOR POSITIONING REFERENCE SIGNAL, AND TRANSMITTING AND RECEIVING NODES**

ÜBERTRAGUNGSVERFAHREN UND VORRICHTUNG ZUM POSITIONIEREN EINES REFERENZSIGNALS, EMPFANGSVERFAHREN UND VORRICHTUNG ZUM POSITIONIEREN EINES REFERENZSIGNALS, SENDEKNOTEN UND EMPFANGSKNOTEN

PROCÉDÉ ET APPAREIL D'ÉMISSION DE SIGNAL DE RÉFÉRENCE DE POSITIONNEMENT, PROCÉDÉ ET APPAREIL DE RÉCEPTION DE SIGNAL DE RÉFÉRENCE DE POSITIONNEMENT, NOEUD ÉMETTEUR ET NOEUD RÉCEPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2019 CN 201910239843**

(43) Date of publication of application:
**22.12.2021 Bulletin 2021/51**

(73) Proprietor: **ZTE Corporation**
**Shenzhen, Guangdong 518057 (CN)**

(72) Inventors:
• **BI, Cheng**
  **Shenzhen, Guangdong 518057 (CN)**
• **YUAN, Yifei**
  **Shenzhen, Guangdong 518057 (CN)**
• **CHEN, Shijun**
  **Shenzhen, Guangdong 518057 (CN)**
• **XU, Wanfu**
  **Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(56) References cited:
CN-A- 107 483 166    CN-A- 108 023 698
CN-A- 110 557 235    US-A1- 2018 131 493
US-A1- 2019 053 711

• "3rd Generation Partnership Project; Technical Specification Group Radio Access Network; Evolved Universal Terrestrial Radio Access (E-UTRA); Physical channels and modulation (Release 15)", 3GPP STANDARD; TECHNICAL SPECIFICATION; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V15.3.0, 27 September 2018 (2018-09-27), pages 94 - 187, XP051487404

- INTEL CORPORATION: "Summary for NR-Positioning AI - 7.2.10.1.1 DL only Based Positioning", 26 February 2019 (2019-02-26), pages 1 - 21, XP051601069, Retrieved from the Internet <URL:http://www.3gpp.org/ftp/tsg%5Fran/WG1%5FRL1/TSGR1%5F96/Docs/R1%2D1903394%2Ezip>

- CATT: "Further discussion of NR RAT-dependent DL Positioning", 3GPP DRAFT; R1-1901980, 1 March 2019 (2019-03-01), Athens, Greece, pages 1 - 30, XP051599674

**Description**

**TECHNICAL FIELD**

The present disclosure relates to, but is not limited to, transmitting and receiving methods and devices for positioning reference signal, transmitting and receiving nodes and computer-readable storage media.

**BACKGROUND**

With an increase in the frequency of radio waves used in mobile communication, a path loss also increases. Based on the fact that a size of an antenna is fixed relative to a wavelength of radio waves, it is possible to compensate for a high frequency path loss by increasing the number of antennas, without increasing a size of an antenna array. Moreover, the difficulty of signal coverage is greatly increased due to an increase in reflection, diffraction and building penetration loss. Massive Multiple-Input Multiple-Output (Massive MIMO) can generate adjustable high-gain shaped beams, significantly improve signal coverage and reduce interference to surrounding areas, so that the Massive MIMO is widely applied to 5th generation mobile networks (5G).

The support for positioning has been introduced since LTE Release 9 (Long Term Evolution Release 9), and Positioning Reference Signal (PRS) has also been introduced to realize downlink positioning. In general, a receiving node needs to measure downlink signals transmitted from one or several cells to obtain a measurement result, which is further used to calculate a position.

Downlink PRSs to be measured are all transmitted in a broadcasting way before the 5G, but a design of 5G PRS should support transmitting PRSs in a form of beams according to the recent New Radio positioning Study Item (NR positioning SI). However, in a case where a plurality of PRS resource blocks transmit the same information through beam scanning within one PRS burst, a receiving node cannot identify received PRS blocks when receiving the PRS blocks, thus the receiving node cannot determine service beams. Document "3rd Generation Partnership Project; Technical Specification Group Radio Access Network; Evolved Universal Terrestrial Radio Access (E-UTRA); Physical channels and modulation (Release 15)", 3GPP STANDARD; TECHNICAL SPECIFICATION; 3GPP TS 36.211, no. V15.3.0, (2018-09-27), pages 94-187, defines PRS allocation and generation. Document INTEL CORPORATION: "Summary for NR-Positioning AI - 7.2.10.1.1 DL only Based Positioning", 3GPP DRAFT; R1-1903394, (2019-02-26) discloses beam sweeping of PRS and support for subcarrier spacings, SCS, up to 240kHz.

**SUMMARY**

A transmitting method and corresponding receiving method, transmitting node, computer-readable storage medium, receiving node and computer-readable storage medium are defined by the appended independent claims 1, 11, 12, 13, 14, 15 respectively. The invention is defined by the appended claims.

**BRIEF DESCRIPTION OF THE DRAWINGS**

Fig. 1 is a flowchart illustrating a transmitting method for PRS according to the present disclosure;
Fig. 2 is a schematic diagram of a PRS resource block shown in Fig. 1;
Fig. 3 is a distribution diagram of a PRS sequence according to Application Example I of the present disclosure;
Fig. 4 is a distribution diagram of a PRS sequence according to Application Example II of the present disclosure;
Fig. 5 is a distribution diagram of a PRS sequence according to Application Example III of the present disclosure;
Fig. 6 is a distribution diagram of a PRS sequence according to Application Example IV of the present disclosure;
Fig. 7 is a distribution diagram of a PRS sequence according to Application Example V of the present disclosure;
Fig. 8 is a distribution diagram of a PRS sequence according to Application Example VI of the present disclosure;
Fig. 9 is a distribution diagram of a PRS sequence according to Application Example VII of the present disclosure;
Fig. 10 is a distribution diagram of a PRS sequence according to Application Example VIII of the present disclosure;
Fig. 11 is a distribution diagram of a PRS sequence according to Application Example IX of the present disclosure;
Fig. 12 is a flowchart illustrating a receiving method for PRS according to the present disclosure;
Fig. 13 is a schematic structural diagram of a transmitting device for PRS according to the present disclosure;
Fig. 14 is a schematic structural diagram of a receiving device for PRS according to the present disclosure;
Figure 15 is a schematic structural diagram of a transmitting node according to the present disclosure; and
Fig. 16 is a schematic structural diagram of a receiving node according to the present disclosure.

## DETAILED DESCRIPTION

Embodiments of the present disclosure will be described in detail below with reference to the accompanying drawings.

The steps illustrated in the flowcharts of the drawings may be performed in a computer system such as a set of computer-executable instructions. Although a logical order is illustrated in the flowchart, the steps illustrated or described may be performed in an order different from that described herein in some cases.

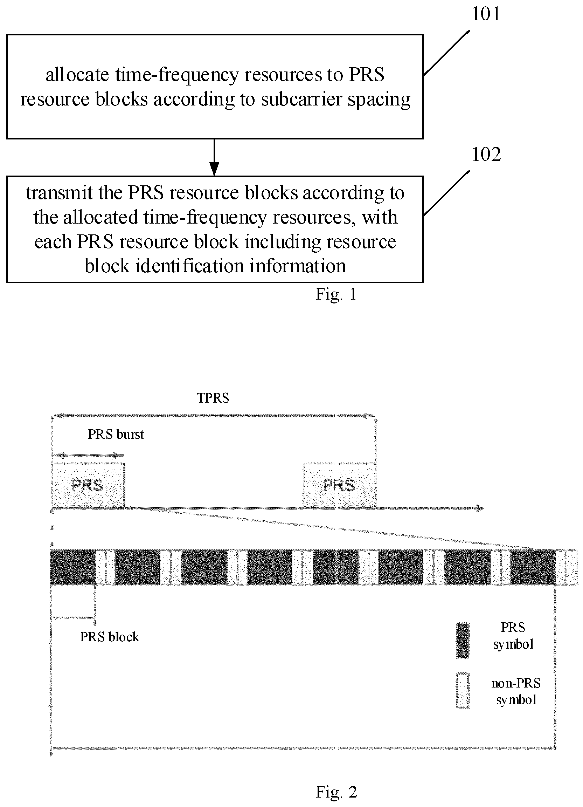

As shown in Fig. 1, a transmitting method for PRS provided by the present disclosure is applied to a transmitting node and includes steps 101 and 102.

At step 101, time-frequency resources are allocated to PRS resource blocks according to subcarrier spacing.

In an embodiment, the time-frequency resources are allocated to the PRS resource blocks with a half subframe (5ms) taken as a scheduling period.

The subcarrier spacing may be 15kHZ, 30kHZ, 120kHZ, 240kHZ, etc. A scenario corresponding to each subcarrier spacing is described below.

Scenario A: the subcarrier spacing is 15kHZ

In the case where the subcarrier spacing is 15kHZ, a position of a first symbol allocated to each PRS resource block is $\{2,8\}+14\cdot n$, where n is a natural number less than or equal to 4.

When a carrier frequency is less than or equal to 3GHz, $n = 2, 3$; when the carrier frequency is greater than 3GHz and less than or equal to 6GHz, $n = 1, 2, 3, 4$.

Scenario B: the subcarrier spacing is 30kHZ

In the case where the subcarrier spacing is 30kHZ, a position of a first symbol allocated to each PRS resource block is $\{2,8\}+14\cdot n$, where n is a natural number less than or equal to 7.

In an embodiment, in a scenario where Frequency Division Duplexing (FDD) is adopted, when a carrier frequency is less than or equal to 3GHz, $n = 2,3$; when the carrier frequency is greater than 3GHz and less than or equal to 6GHz, $n = 4, 5, 6, 7$.

In an embodiment, in a scenario where Time Division Duplexing (TDD) is adopted, when a carrier frequency is less than or equal to 2.4GHz, $n = 2,3$; when the carrier frequency is greater than 2.4GHz and less than or equal to 6GHz,

$$n = 4, 5, 6, 7.$$

Scenario C: the subcarrier spacing is 120kHZ

In the case where the subcarrier spacing is 120kHZ, a position of a first symbol allocated to each PRS resource block is $\{4, 8, 16, 20\} + 28\cdot n$, where

$$n = 1, 2, 3, 4, 6, 7, 8, 9, 11, 12, 13, 14, 16, 17, 18, 19.$$

Scenario D: the subcarrier spacing is 240kHZ

In the case where the subcarrier spacing is 240kHZ, a position of a first symbol allocated to each PRS resource block is $\{4,8,16,20,32,36,40,44\} + 56\cdot n$, where

$$n = 10, 11, 12, 13, 15, 16, 17, 18.$$

Carrier frequencies in the Scenarios C and D are greater than 6GHz.

According the embodiments of the present disclosure, the positions of the first symbols allocated to the PRS resource blocks according to the subcarrier spacing allow a PRS sequence to be reasonably distributed in the time-frequency resources, so that a receiving node can easily receive and detect the PRS resource blocks.

At step 102, the PRS resource blocks are transmitted according to the allocated time-frequency resources, with each PRS resource block including resource block identification (ID) information.

When the PRS is transmitted through a beam, the resource block ID information has a corresponding relationship with the beam. That is, when the receiving node learns the resource block ID information, the receiving node also learns the information of the beam through which the PRS is transmitted.

In an embodiment, each PRS resource block includes $N_{symb}^{prsb}$ continuous or discontinuous symbols, with

$$N_{symb}^{prsb} = 1, 2, 3, 4, 5, 6 \, .$$

With reference to Fig. 2, a PRS period (TPRS) includes a plurality of PRS bursts each including a plurality of PRS resource blocks, and each PRS resource block includes $N_{symb}^{prsb}$ continuous or discontinuous symbols. Each PRS resource block corresponds to one beam, and an angle covered by eight beams is 120 degrees. A transmitting node polls the eight beams, and a receiving node receives a corresponding PRS sequence.

In an embodiment, within one scheduling period, signals transmitted by the first $N_{symb}^{prsb} - 1$ symbols in PRS resource blocks transmitted by a same transmitting terminal are the same.

The condition that the signals transmitted by the first $N_{symb}^{prsb} - 1$ symbols in the PRS resource blocks are the same refers to that the signals transmitted by the $0^{th}$, $1^{st}$, $\ldots\ldots (N_{symb}^{prsb} - 1)^{th}$ symbols in the i$^{th}$ PRS resource block are correspondingly the same as the signals transmitted by the $0^{th}$, $1^{st}$, $\ldots\ldots (N_{symb}^{prsb} - 1)^{th}$ symbols in the j$^{th}$ PRS resource block.

In an embodiment, a sequence $r(m)$ transmitted by the first $N_{symb}^{prsb} - 1$ symbols in a PRS resource block is generated in a following way:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,\ldots, xN_{RB}^{max,DL} - 1$$

An initial value of a sequence $c(i)$ is determined according to at least one of:

$$c_{init} = 2^{26} \cdot \left\lfloor N_{ID}^{PRS}/256 \right\rfloor + 2^8 \cdot \left(\left(N_{symb}^{prsb}n_{hf} + \left(N_{symb}^{-slot}n_{s,f}^u + l + 1 - s_i\right) \bmod N_{symb}^{prsb} + 1\right) \cdot \left(2 \cdot \left(N_{ID}^{PRS} \bmod 256\right) + 1\right)\right) + \left(N_{ID}^{PRS} \bmod 256\right);$$

$$c_{init} = 2^{25} \cdot \left\lfloor N_{ID}^{PRS}/128 \right\rfloor + 2^8 \cdot \left(\left(N_{symb}^{prsb}n_{hf} + \left(N_{symb}^{slot}n_{s,f}^u + l + 1 - s_i\right) \bmod N_{symb}^{prsb} + 1\right) \cdot \left(2 \cdot \left(N_{ID}^{PRS} \bmod 128\right) + 1\right)\right) + 2\left(N_{ID}^{PRS} \bmod 128\right) + N_{cp};$$

$$c_{init} = 2^{26} \cdot \left\lfloor N_{ID}^{PRS}/256 \right\rfloor + 2^8 \cdot \left(\left(\left(N_{symb}^{slot}n_{s,f}^u + l + 1 - s_i\right) \bmod N_{symb}^{prsb} + 1\right) \cdot \left(2 \cdot \left(N_{ID}^{PRS} \bmod 256\right) + 1\right)\right) + \left(N_{ID}^{PRS} \bmod 256\right);$$

$$c_{init} = 2^{25} \cdot \left\lfloor N_{ID}^{PRS}/128 \right\rfloor + 2^8 \cdot \left(\left(\left(N_{symb}^{slot}n_{s,f}^u + l + 1 - s_i\right) \bmod N_{symb}^{prsb} + 1\right) \cdot \left(2 \cdot \left(N_{ID}^{PRS} \bmod 128\right) + 1\right)\right) + 2\left(N_{ID}^{PRS} \bmod 128\right) + N_{cp};$$

$$c_{init} = \left(2^{13}\left(N_{symb}^{prsb}n_{hf} + \left(N_{symb}^{slot}n_{s,f}^u + l + 1 - s_i\right) \bmod N_{symb}^{prsb} + 1\right) \cdot \left(2N_{ID}^{PRS} + 1\right) + N_{ID}^{PRS}\right) \bmod 2^{31};$$

$$c_{init} = 2^{13} \cdot \left(\left(N_{symb}^{prsb}n_{hf} + \left(N_{symb}^{slot}n_{s,f}^u + l + 1 - s_i\right) \bmod N_{symb}^{prsb} + 1\right) \cdot \left(2 \cdot N_{ID}^{PRS} + 1\right)\right) + N_{ID}^{PRS}$$

where $n_{s,f}^{u}$ is a slot index in a radio frame; $l$ is a symbol index in a slot; $N_{symb}^{prsb}$ is a total number of symbols included in a PRS resource block; $N_{symb}^{slot}$ is a total number of symbols included in a slot; $n_{hf}$ represents a number of a half frame, $n_{hf}=0$ indicates the first half frame of one subframe and $n_{hf}=1$ indicates the remaining half frame of the subframe; $s_i$ is a position of a first symbol in a corresponding PRS resource block; $N_{\mathrm{ID}}^{\mathrm{PRS}} \in \{0,1,...,8191\}$ is a PRS ID for generating the initial value, the PRS ID may be configured by an upper layer, and the PRS ID is equal to a cell ID $N_{\mathrm{ID}}^{\mathrm{cell}}$ if the upper layer does not configure the PRS ID; and x is related to a PRS in time domain and is a preset value configured by the upper layer;

$$N_{\mathrm{CP}} = \begin{cases} 1 & \mathrm{Normal\ CP} \\ 0 & \mathit{Extended}\ \mathrm{CP} \end{cases}.$$

In an embodiment, a signal transmitted by the last symbol in the PRS resource block includes the resource block ID information.

The resource block ID information may be an ID index of the PRS resource block.

In an embodiment, a sequence $r(m)$ transmitted by the last symbol in the PRS resource block is generated in a following way:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,..., xN_{\mathrm{RB}}^{\mathrm{max,DL}} - 1$$

An initial value of a sequence $c(i)$ is determined according to at least one of:

$$c_{\mathrm{init}} = 2^{26} \cdot \left\lfloor N_{\mathrm{ID}}^{\mathrm{PRS}}/256 \right\rfloor + 2^{20} \cdot i_{prs} + 2^{8} \cdot \left(\left(N_{symb}^{prsb}n_{hf} + \left(N_{symb}^{slot}n_{s,f}^{u} + l + 1 - s_i\right)\bmod N_{symb}^{prsb} + 1\right) \cdot \left(2 \cdot \left(N_{\mathrm{ID}}^{\mathrm{PRS}}\bmod 256\right) + 1\right)\right) + \left(N_{\mathrm{ID}}^{\mathrm{PRS}}\bmod 256\right);$$

$$c_{\mathrm{init}} = 2^{25} \cdot \left\lfloor N_{\mathrm{ID}}^{\mathrm{PRS}}/128 \right\rfloor + 2^{19} \cdot i_{prs} + 2^{8} \cdot \left(\left(N_{symb}^{prsb}n_{hf} + \left(N_{symb}^{slot}n_{s,f}^{u} + l + 1 - s_i\right)\bmod N_{symb}^{prsb} + 1\right) \cdot \left(2 \cdot \left(N_{\mathrm{ID}}^{\mathrm{PRS}}\bmod 128\right) + 1\right)\right) + 2\left(N_{\mathrm{ID}}^{\mathrm{PRS}}\bmod 128\right) + N_{cp};$$

$$c_{init} = \left(2^{13} \cdot \left(N_{symb}^{slot}n_{s,f}^{u} + l + 1\right)\left(2N_{ID}^{PRS} + 1\right) + N_{ID}^{PRS}\right)\bmod 2^{31};$$

$$c_{init} = \left(2^{13} \cdot \left(i_{prs} + 1\right) \cdot \left(2N_{ID}^{PRS} + 1\right) + N_{ID}^{PRS}\right)\bmod 2^{31};$$

$$c_{init} = 2^{12}\left(i_{prs} + 1\right) \cdot \left(2\left(N_{ID}^{PRS}\bmod 4096\right) + 1\right) + \left(N_{ID}^{PRS}\bmod 4096\right);$$

$$c_{init} = 2^{13}\left(i_{prs} + 1\right) \cdot \left(2\left(N_{ID}^{PRS}\bmod 4096\right) + 1\right) + 2\left(N_{ID}^{PRS}\bmod 4096\right) + N_{cp};$$

$$c_{init} = 2^{12}\left(i_{prs} + 1\right)\left(\left\lfloor N_{ID}^{PRS}/N_{symb}^{prsb} \right\rfloor + 1\right) + 2^{6}\left(i_{prs} + 1\right) + \left(N_{ID}^{PRS}\bmod N_{symb}^{prsb}\right)$$

where $i_{prs}$ is an ID index of the PRS resource block and is less than or equal to $N_{symb}^{prsb}$; $n_{s,f}^{u}$ is a slot index in a radio frame; $l$ is a symbol index in a slot; $N_{symb}^{prsb}$ is a total number of symbols included in a PRS resource block; $N_{symb}^{slot}$ is a total number of symbols included in a slot; $n_{hf}$ represents a number of a half frame, $n_{hf}=0$ indicates the first half frame of one subframe and $n_{hf}=1$ indicates the remaining half frame of the subframe; $s_i$ is a position of a first symbol in a corresponding PRS resource block; $N_{\mathrm{ID}}^{\mathrm{PRS}} \in \{0,1,...,8191\}$ is a PRS ID for generating the initial value, the PRS ID may be configured by an upper layer, and the PRS ID is equal to a cell ID $N_{\text{ID}}^{\text{cell}}$ if the upper layer does not configure the PRS ID; and x is related to a PRS in time domain and is a preset value configured by the upper layer;

$$N_{\text{CP}} = \begin{cases} 1 & \text{Normal CP} \\ 0 & \text{Extended CP} \end{cases}.$$

According to the embodiments of the present disclosure, the time-frequency resources are reasonably allocated to the PRS resource blocks which include the resource block ID information, so that the PRSs can be transmitted by means of polling beams.

The transmitting method for PRS is illustrated below by several application examples. In the application examples, a signal generation mode of a signal transmitted by the first $N_{symb}^{prsb} - 1$ symbols in a PRS resource block is referred to as Mode One, and a signal generation mode of a signal transmitted by the last symbol in the PRS resource block is referred to as Mode Two.

Application Example I

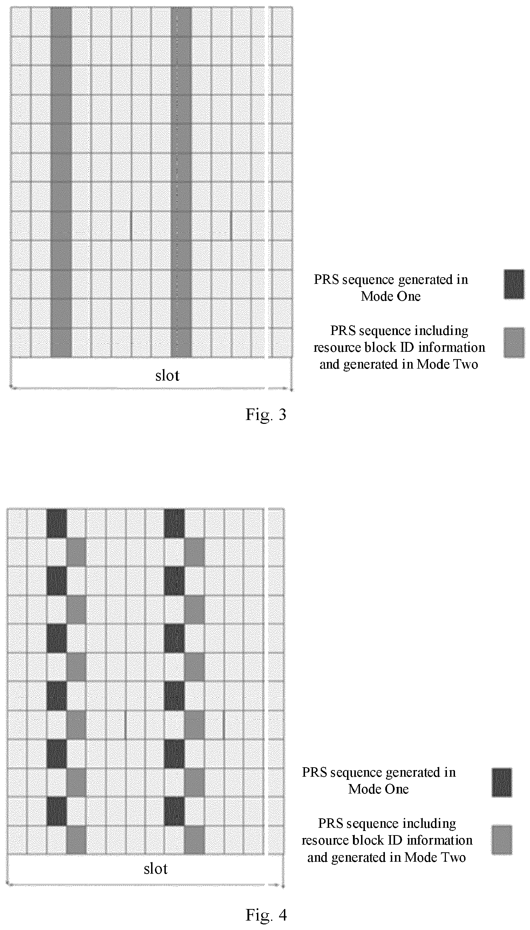

The transmitting method for PRS is applied in the Scenario C or D, that is, the subcarrier spacing is 120kHZ or 240kHZ. $N_{symb}^{prsb}$ is set to 1, a starting position of each PRS resource block is determined according to the position of the first symbol set in the Scenario C or D of the step 101, resources are allocated to PRSs in the PRS resource block in mode com1, the value of x is 12, and a PRS sequence is determined according to the signal generation mode (Mode Two) of the signal transmitted by the last symbol in the PRS resource block, as shown in Fig. 3.

The value of x corresponding to mode com1 is 12; the value of x corresponding to mode com2 is 6; the value of x corresponding to mode com3 is 4; the value of x corresponding to mode com4 is 3; and the value of x corresponding to mode com6 is 2.

Application Example II

The transmitting method for PRS is applied in the Scenario C or D, that is, the subcarrier spacing is 120kHZ or 240kHZ. $N_{symb}^{prsb}$ is set to 2, a starting position of each PRS resource block is determined according to the position of the first symbol set in the Scenario C or D of the step 101, resources are allocated to PRSs in mode com2, the value of x is 6, a PRS sequence of a first symbol is determined according to the signal generation mode (Mode One) of the signal transmitted by the first $N_{symb}^{prsb} - 1$ symbols in the PRS resource block, and a PRS sequence of a second symbol is determined according to the signal generation mode (Mode Two) of the signal transmitted by the last symbol in the PRS resource block, as shown in Fig. 4.

Application Example III

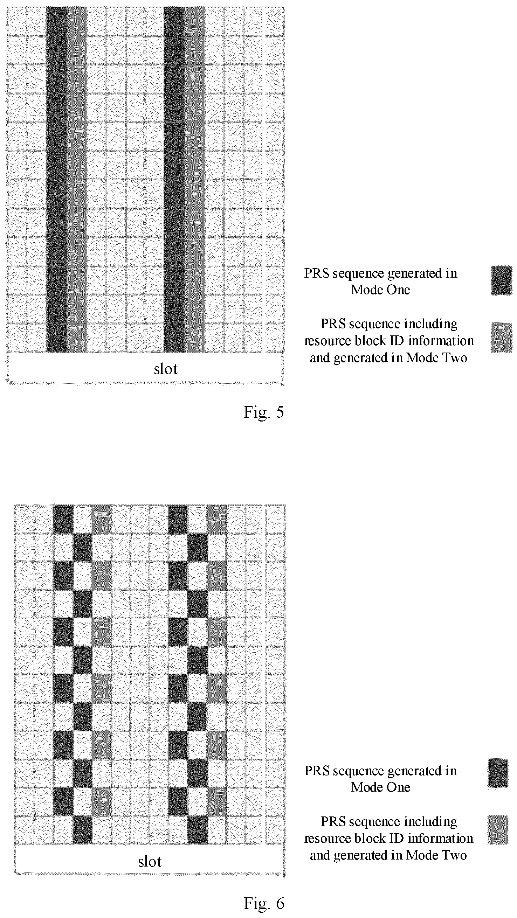

The transmitting method for PRS is applied in the Scenario C or D, that is, the subcarrier spacing is 120kHZ or 240kHZ. $N_{symb}^{prsb}$ is set to 2, a starting position of each PRS resource block is determined according to the position of the first symbol set in the Scenario C or D of the step 101, resources are allocated to PRSs in mode com1, the value of x is 12, a PRS sequence of a first symbol is determined according to the signal generation mode (Mode One) of the signal transmitted by the first $N_{symb}^{prsb} - 1$ symbols in the PRS resource block, and a PRS sequence of a second symbol is determined according to the signal generation mode (Mode Two) of the signal transmitted by the last symbol in the PRS resource block, as shown in Fig. 5.

Application Example IV

The transmitting method for PRS is applied in the Scenario A, B, C or D, that is, the subcarrier spacing is 15kHZ, 30kHZ, 120kHZ or 240kHZ. $N_{symb}^{prsb}$ is set to 3, a starting position of each PRS resource block is determined according to the position of the first symbol set in the Scenario A, B, C or D of the step 101, resources are allocated to PRSs in mode com2, the value of x is 6, PRS sequences of first and second symbols are determined according to the signal generation mode (Mode One) of the signal transmitted by the first $N_{symb}^{prsb} - 1$ symbols in the PRS resource block, and a PRS sequence of a third symbol is determined according to the signal generation mode (Mode Two) of the signal transmitted by the last symbol in the PRS resource block, as shown in Fig. 6.

Application Example V

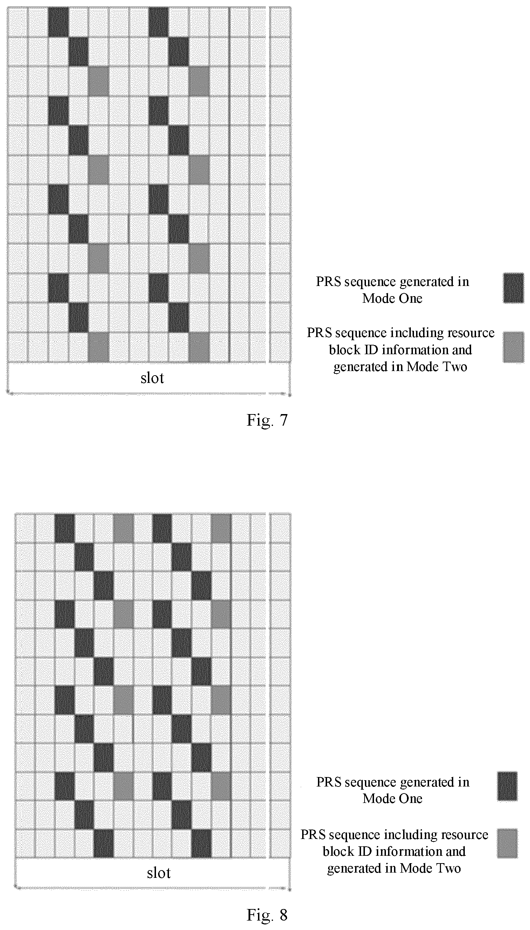

The transmitting method for PRS is applied in the Scenario A, B, C or D, that is, the subcarrier spacing is 15kHZ, 30kHZ, 120kHZ or 240kHZ. $N_{symb}^{prsb}$ is set to 3, a starting position of each PRS resource block is determined according to the position of the first symbol set in the Scenario A, B, C or D of the step 101, resources are allocated to PRSs in mode com3, the value of x is 4, PRS sequences of first and second symbols are determined according to the signal generation mode (Mode One) of the signal transmitted by the first $N_{symb}^{prsb} - 1$ symbols in the PRS resource block, and a PRS sequence of a third symbol is determined according to the signal generation mode (Mode Two) of the signal transmitted by the last symbol in the PRS resource block, as shown in Fig. 7.

Application Example VI

The transmitting method for PRS is applied in the Scenario A, B, C or D, that is, the subcarrier spacing is 15kHZ, 30kHZ, 120kHZ or 240kHZ. $N_{symb}^{prsb}$ is set to 4, a starting position of each PRS resource block is determined according to the position of the first symbol set in the Scenario A, B, C or D of the step 101, resources are allocated to PRSs in mode com3, the value of x is 4, PRS sequences of first to third symbols are determined according to the signal generation mode (Mode One) of the signal transmitted by the first $N_{symb}^{prsb} - 1$ symbols in the PRS resource block, and a PRS sequence of a fourth symbol is determined according to the signal generation mode (Mode Two) of the signal transmitted by the last symbol in the PRS resource block, as shown in Fig. 8.

Application Example VII

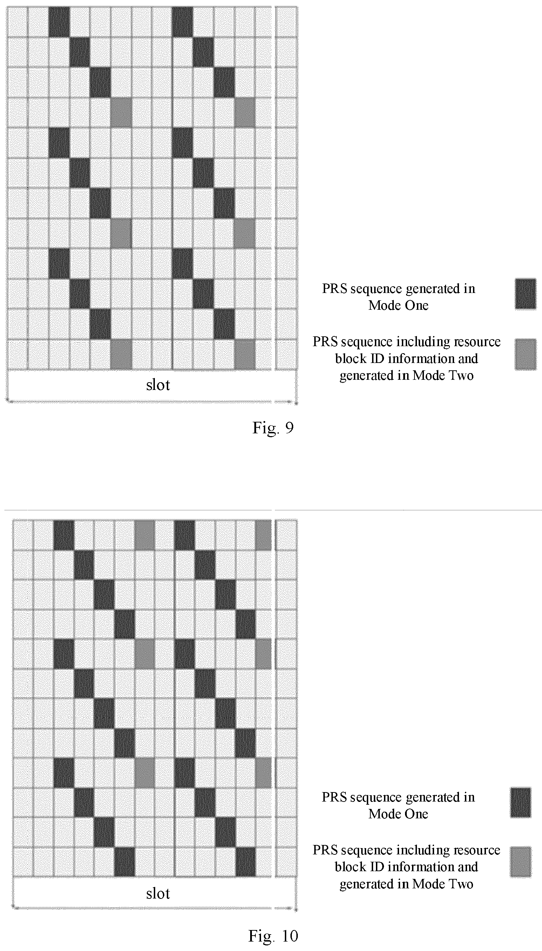

The transmitting method for PRS is applied in the Scenario A, B, C or D, that is, the subcarrier spacing is 15kHZ, 30kHZ, 120kHZ or 240kHZ. $N_{symb}^{prsb}$ is set to 4, a starting position of each PRS resource block is determined according to the position of the first symbol set in the Scenario A, B, C or D of the step 101, resources are allocated to PRSs in mode com4, the value of x is 3, PRS sequences of first to third symbols are determined according to the signal generation mode (Mode One) of the signal transmitted by the first $N_{symb}^{prsb} - 1$ symbols in the PRS resource block, and a PRS sequence of a fourth symbol is determined according to the signal generation mode (Mode Two) of the signal transmitted by the last symbol in the PRS resource block, as shown in Fig. 9.

Application Example VIII

The transmitting method for PRS is applied in the Scenario A, B, C or D, that is, the subcarrier spacing is 15kHZ, 30kHZ, 120kHZ or 240kHZ. $N_{symb}^{prsb}$ is set to 5, a starting position of each PRS resource block is determined according to the position of the first symbol set in the Scenario A, B, C or D of the step 101, resources are allocated to PRSs in mode com4, the value of x is 3, PRS sequences of first to fourth symbols are determined according to the signal generation mode (Mode One) of the signal transmitted by the first $N_{symb}^{prsb} - 1$ symbols in the PRS resource block, and a PRS sequence of a fifth symbol is determined according to the signal generation mode (Mode Two) of the signal transmitted by the last symbol in the PRS resource block, as shown in Fig. 10.

Application Example IX

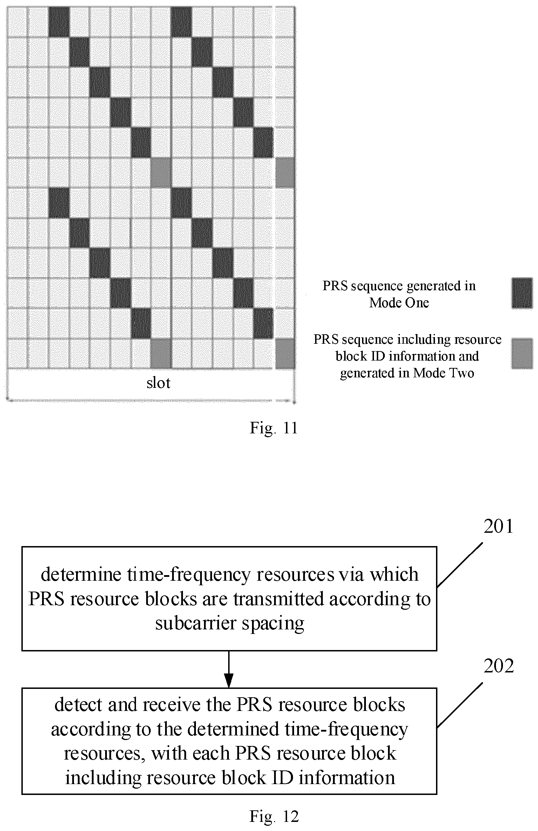

The transmitting method for PRS is applied in the Scenario A, B, C or D, that is, the subcarrier spacing is 15kHZ, 30kHZ, 120kHZ or 240kHZ. $N_{symb}^{prsb}$ is set to 6, a starting position of each PRS resource block is determined according to the position of the first symbol set in the Scenario A, B, C or D of the step 101, resources are allocated to PRSs in mode com6, the value of x is 2, PRS sequences of first to fifth symbols are determined according to the signal generation mode (Mode One) of the signal transmitted by the first $N_{symb}^{prsb} - 1$ symbols in the PRS resource block, and a PRS sequence of a sixth symbol is determined according to the signal generation mode (Mode Two) of the signal transmitted by the last symbol in the PRS resource block, as shown in Fig. 11.

As shown in Fig. 12, a receiving method for PRS provided by an embodiment of the present disclosure is applied to a receiving node and includes steps 201 and 202

At step 201, time-frequency resources via which PRS resource blocks are transmitted are determined according to subcarrier spacing.

Corresponding to the transmitting node, the receiving node determines the time-frequency resources via which the PRS resource blocks are transmitted in the same manner as the transmitting node. A scenario corresponding to each subcarrier spacing is described below.

Scenario A: the subcarrier spacing is 15kHZ

In the case where the subcarrier spacing is 15kHZ, it is determined that a position of a first symbol in each PRS resource block is {2,8}+14·$n$, where n is a natural number less than or equal to 4.

When a carrier frequency is less than or equal to 3GHz, $n$ = 2,3; when the carrier frequency is greater than 3GHz and less than or equal to 6GHz, $n$ = 1, 2, 3, 4.

Scenario B: the subcarrier spacing is 30kHZ

In the case where the subcarrier spacing is 30kHZ, it is determined that a position of a first symbol in each PRS resource block is {2,8}+14·$n$, where n is a natural number less than or equal to 7.

In an embodiment, in a scenario where FDD is adopted, when a carrier frequency is less than or equal to 3GHz, $n$ = 2, 3; when the carrier frequency is greater than 3GHz and less than or equal to 6GHz, $n$ = 4, 5, 6, 7.

In an embodiment, in a scenario where TDD is adopted, when a carrier frequency is less than or equal to 2.4GHz, $n$ = 2, 3; when the carrier frequency is greater than 2.4GHz and less than or equal to 6GHz, $n$ = 4,5,6,7 .

Scenario C: the subcarrier spacing is 120kHZ

In the case where the subcarrier spacing is 120kHZ, it is determined that a position of a first symbol in each PRS resource block is {4 8,16, 20} + 28·$n$, where

$$n = 1, 2, 3, 4, 6, 7, 8, 9, 11, 12, 13, 14, 16, 17, 18, 19 .$$

Scenario D: the subcarrier spacing is 240kHZ

In the case where the subcarrier spacing is 240kHZ, it is determined that a position of a first symbol in each PRS resource block is

$$\{4, 8, 16, 20, 32, 36, 40, 44\} + 56 \cdot n ,$$

where $n$ =10, 11, 12, 13, 15, 16, 17, 18.

Carrier frequencies in the Scenarios C and D are greater than 6GHz.

In the embodiment of the present disclosure, a PRS sequence is reasonably allocated in the time-frequency resources, so that the receiving node can easily receive and detect the PRS sequence.

At step 202, the PRS resource blocks are detected and received according to the determined time-frequency resources, with each PRS resource block including resource block ID information.

When the PRS is transmitted through a beam, the resource block ID information has a corresponding relationship with the beam. That is, when the receiving node learns the resource block ID information, the receiving node also learns the information of the beam through which the PRS is transmitted.

In an embodiment, each PRS resource block includes $N_{symb}^{prsb}$ continuous or discontinuous symbols, with

$$N_{symb}^{prsb} = 1, 2, 3, 4, 5, 6 \ .$$

With reference to Fig. 2, a TPRS includes a plurality of PRS bursts each including a plurality of PRS resource blocks, and each PRS resource block includes $N_{symb}^{prsb}$ continuous or discontinuous symbols.

In an embodiment, a signal transmitted by the last symbol in the PRS resource block includes the resource block ID information.

The resource block ID information may be an ID index of the PRS resource block.

In an embodiment, the step 202 includes: detecting and receiving the first $N_{symb}^{prsb} - 1$ symbols in PRS resource blocks transmitted by one or more transmitting nodes; and detecting and receiving the last symbols of the PRS resource blocks, and determining the corresponding resource block ID information of the PRS resource blocks according to the last symbols.

The step of detecting and receiving the first $N_{symb}^{prsb} - 1$ symbols in the PRS resource blocks transmitted by one or more transmitting nodes includes: generating a sequence $r(m)$ transmitted by the first $N_{symb}^{prsb} - 1$ symbols in a PRS resource block in a following way:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,\ldots, xN_{\mathrm{RB}}^{\mathrm{max,DL}} - 1 ;$$

and

detecting the first $N_{symb}^{prsb} - 1$ symbols in the PRS resource blocks according to the generated sequence $r(m)$.

An initial value of a sequence $c(i)$ is determined according to at least one of:

$$c_{\mathrm{init}} = 2^{26} \cdot \left\lfloor N_{\mathrm{ID}}^{\mathrm{PRS}} / 256 \right\rfloor + 2^8 \cdot \left(\left(N_{symb}^{prsb}n_{hf} + \left(N_{symb}^{\cdot slot}n_{s,f}^u + l + 1 - s_i\right) \bmod N_{symb}^{prsb} + 1\right) \cdot \left(2 \cdot \left(N_{\mathrm{ID}}^{\mathrm{PRS}} \bmod 256\right) + 1\right)\right) + \left(N_{\mathrm{ID}}^{\mathrm{PRS}} \bmod 256\right);$$

$$c_{\mathrm{init}} = 2^{25} \cdot \left\lfloor N_{\mathrm{ID}}^{\mathrm{PRS}} / 128 \right\rfloor + 2^8 \cdot \left(\left(N_{symb}^{prsb}n_{hf} + \left(N_{symb}^{slot}n_{s,f}^u + l + 1 - s_i\right) \bmod N_{symb}^{prsb} + 1\right) \cdot \left(2 \cdot \left(N_{\mathrm{ID}}^{\mathrm{PRS}} \bmod 128\right) + 1\right)\right) + 2\left(N_{\mathrm{ID}}^{\mathrm{PRS}} \bmod 128\right) + N_{cp};$$

$$c_{\mathrm{init}} = 2^{26} \cdot \left\lfloor N_{\mathrm{ID}}^{\mathrm{PRS}} / 256 \right\rfloor + 2^8 \cdot \left(\left(\left(N_{symb}^{slot}n_{s,f}^u + l + 1 - s_i\right) \bmod N_{symb}^{prsb} + 1\right) \cdot \left(2 \cdot \left(N_{\mathrm{ID}}^{\mathrm{PRS}} \bmod 256\right) + 1\right)\right) + \left(N_{\mathrm{ID}}^{\mathrm{PRS}} \bmod 256\right);$$

$$c_{\mathrm{init}} = 2^{25} \cdot \left\lfloor N_{\mathrm{ID}}^{\mathrm{PRS}} / 128 \right\rfloor + 2^8 \cdot \left(\left(\left(N_{symb}^{slot}n_{s,f}^u + l + 1 - s_i\right) \bmod N_{symb}^{prsb} + 1\right) \cdot \left(2 \cdot \left(N_{\mathrm{ID}}^{\mathrm{PRS}} \bmod 128\right) + 1\right)\right) + 2\left(N_{\mathrm{ID}}^{\mathrm{PRS}} \bmod 128\right) + N_{cp};$$

$$c_{init} = \left(2^{13}\left(N_{symb}^{prsb}n_{hf} + \left(N_{symb}^{slot}n_{s,f}^u + l + 1 - s_i\right) \bmod N_{symb}^{prsb} + 1\right) \cdot \left(2N_{ID}^{PRS} + 1\right) + N_{ID}^{PRS}\right) \bmod 2^{31};$$

$$c_{\mathrm{init}} = 2^{13} \cdot \left(\left(N_{symb}^{prsb}n_{hf} + \left(N_{symb}^{slot}n_{s,f}^u + l + 1 - s_i\right) \bmod N_{symb}^{prsb} + 1\right) \cdot \left(2 \cdot N_{\mathrm{ID}}^{\mathrm{PRS}} + 1\right)\right) + N_{\mathrm{ID}}^{\mathrm{PRS}}$$

where $n_{s,f}^u$ is a slot index in a radio frame; $l$ is a symbol index in a slot; $N_{symb}^{prsb}$ is a total number of symbols included in a PRS resource block; $N_{symb}^{slot}$ is a total number of symbols included in a slot; $n_{hf}$ represents a number of a half frame, $n_{hf}=0$

indicates the first half frame of one subframe and $n_{hf}=1$ indicates the remaining half frame of the subframe; $s_i$ is a position of a first symbol in a corresponding PRS resource block; $N_{\mathrm{ID}}^{\mathrm{PRS}} \in \{0,1,\ldots,8191\}$ is a PRS ID for generating the initial value, the PRS ID may be configured by an upper layer, and the PRS ID is equal to a cell ID $N_{\mathrm{ID}}^{\mathrm{cell}}$ if the upper layer does not configure the PRS ID; and x is related to a PRS in time domain and is a preset value configured by the upper layer;

$$N_{\mathrm{CP}} = \begin{cases} 1 & \text{Normal CP} \\ 0 & \textit{Extended } \text{CP} \end{cases}.$$

In an embodiment, a sequence $r(m)$ transmitted by the last symbol in the PRS resource block is generated in a following way:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,\ldots, xN_{\mathrm{RB}}^{\mathrm{max,DL}} - 1$$

An initial value of a sequence $c(i)$ is determined according to at least one of:

$$c_{\mathrm{init}} = 2^{26} \cdot \left\lfloor N_{\mathrm{ID}}^{\mathrm{PRS}}/256 \right\rfloor + 2^{20} \cdot i_{prs} + 2^{8} \cdot \left(\left(N_{symb}^{prsb} n_{hf} + \left(N_{symb}^{slot} n_{s,f}^u + l + 1 - s_i\right) \bmod N_{symb}^{prsb} + 1\right) \cdot \left(2 \cdot \left(N_{\mathrm{ID}}^{\mathrm{PRS}} \bmod 256\right) + 1\right)\right) + \left(N_{\mathrm{ID}}^{\mathrm{PRS}} \bmod 256\right);$$

$$c_{\mathrm{init}} = 2^{25} \cdot \left\lfloor N_{\mathrm{ID}}^{\mathrm{PRS}}/128 \right\rfloor + 2^{19} \cdot i_{prs} + 2^{8} \cdot \left(\left(N_{symb}^{prsb} n_{hf} + \left(N_{symb}^{slot} n_{s,f}^u + l + 1 - s_i\right) \bmod N_{symb}^{prsb} + 1\right) \cdot \left(2 \cdot \left(N_{\mathrm{ID}}^{\mathrm{PRS}} \bmod 128\right) + 1\right)\right) + 2\left(N_{\mathrm{ID}}^{\mathrm{PRS}} \bmod 128\right) + N_{cp};$$

$$c_{init} = \left(2^{13} \cdot \left(N_{symb}^{slot} n_{s,f}^u + l + 1\right)\left(2N_{ID}^{PRS} + 1\right) + N_{ID}^{PRS}\right) \bmod 2^{31};$$

$$c_{init} = \left(2^{13} \cdot \left(i_{prs} + 1\right) \cdot \left(2N_{ID}^{PRS} + 1\right) + N_{ID}^{PRS}\right) \bmod 2^{31};$$

$$c_{init} = 2^{12}\left(i_{prs} + 1\right) \cdot \left(2\left(N_{ID}^{PRS} \bmod 4096\right) + 1\right) + \left(N_{ID}^{PRS} \bmod 4096\right);$$

$$c_{init} = 2^{13}\left(i_{prs} + 1\right) \cdot \left(2\left(N_{ID}^{PRS} \bmod 4096\right) + 1\right) + 2\left(N_{ID}^{PRS} \bmod 4096\right) + N_{cp};$$

$$c_{init} = 2^{12}\left(i_{prs} + 1\right)\left(\left\lfloor N_{ID}^{PRS}/N_{symb}^{prsb}\right\rfloor + 1\right) + 2^{6}\left(i_{prs} + 1\right) + \left(N_{ID}^{PRS} \bmod N_{symb}^{prsb}\right)$$

where $i_{prs}$ is an ID index of the PRS resource block and is less than or equal to $N_{symb}^{prsb}$; $n_{s,f}^u$ is a slot index in a radio frame; $l$ is a symbol index in a slot; $N_{symb}^{prsb}$ is a total number of symbols included in a PRS resource block; $N_{symb}^{slot}$ is a total number of symbols included in a slot; $n_{hf}$ represents a number of a half frame, $n_{hf}=0$ indicates the first half frame of one subframe and $n_{hf}=1$ in the remaining half frame of the subframe; $s_i$ is a position of a first symbol in a corresponding PRS resource block; $N_{\mathrm{ID}}^{\mathrm{PRS}} \in \{0,1,\ldots,8191\}$ is a PRS ID for generating the initial value, the PRS ID may be configured by an upper layer, and the PRS ID is equal to a cell ID $N_{\mathrm{ID}}^{\mathrm{cell}}$ if the upper layer does not configure the PRS ID; and x is related to a PRS in time domain and is a preset value configured by the upper layer;

$$N_{\mathrm{CP}} = \begin{cases} 1 & \text{Normal CP} \\ 0 & \textit{Extended } \text{CP} \end{cases}.$$

The receiving node can detect and determine corresponding resource block ID information according to the above way of generating the last symbol in the PRS resource block.

In an embodiment, after the steps of detecting and receiving the last symbol in the PRS resource block and determining the corresponding resource block ID information of the PRS resource block according to the last symbol, the method further includes: detecting all PRS sequences in the PRS resource blocks to obtain arrival time of the PRS sequences transmitted by the different transmitting nodes.

By detecting all the PRS sequences in the PRS resource blocks, the arrival time of the PRS sequences transmitted by the different transmitting nodes can be obtained, so that a time difference can be obtained, and the position information of the receiving node itself can be determined according to the time difference.

The embodiments can achieve detection of the resource block ID information of the PRS resource blocks without significantly increasing the detection time, thereby realizing time difference-based positioning in scenarios where the PRSs are transmitted by means of polling beams.

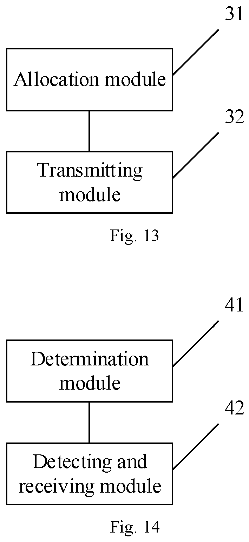

As shown in Fig. 13, an embodiment of the present disclosure further provides a transmitting device for PRS, including an allocation module 31 and a transmitting module 32.

The allocation module 31 is configured to allocate time-frequency resources to PRS resource blocks according to subcarrier spacing.

The transmitting module 32 is configured to transmit the PRS resource blocks according to the allocated time-frequency resources, with each PRS resource block including resource block ID information.

In an embodiment, the allocation module 31 is configured to allocate the time-frequency resources to the PRS resource blocks with a half subframe taken as a scheduling period.

In an embodiment, the allocation module 31 is configured to allocate a position $\{2,8\}+14\cdot n$ to a first symbol in each PRS resource block when the subcarrier spacing is 15kHZ, where n is a natural number less than or equal to 4.

In an embodiment, when a carrier frequency is less than or equal to 3GHz, $n = 2, 3$; when the carrier frequency is greater than 3GHz and less than or equal to 6GHz, $n = 1,2,3,4$.

In an embodiment, the allocation module 31 is configured to allocate a position $\{2,8\}+14\cdot n$ to a first symbol in each PRS resource block when the subcarrier spacing is 30kHZ, where n is a natural number less than or equal to 7.

In an embodiment, in a scenario where FDD is adopted, $n = 2,3$ when a carrier frequency is less than or equal to 3GHz and $n = 4,5,6,7$ when the carrier frequency is greater than 3GHz and less than or equal to 6GHz; and in a scenario where TDD is adopted, $n = 2,3$ when a carrier frequency is less than or equal to 2.4GHz and $n = 4,5,6,7$ when the carrier frequency is greater than 2.4GHz and less than or equal to 6GHz.

In an embodiment, the allocation module 31 is configured to allocate a position $\{4,8,16,20\}+28\cdot n$ to a first symbol in each PRS resource block when the subcarrier spacing is 120kHZ, where $n = 1,2,3,4,6,7,8,9,11,12,13,14,16,17,18,19$.

In an embodiment, the allocation module 31 is configured to allocate a position $\{4, 8,16, 20, 32, 36, 40, 44\}+56\cdot n$ to a first symbol in each PRS resource block when the subcarrier spacing is 240kHZ, where $n = 10,11,12,13,15,16,17,18$.

In an embodiment, each PRS resource block includes $N_{symb}^{prsb}$ continuous or discontinuous symbols, with

$$N_{symb}^{prsb} = 1, 2, 3, 4, 5, 6 \ .$$

In an embodiment, within one scheduling period, signals transmitted by the first $N_{symb}^{prsb} - 1$ symbols in PRS resource blocks transmitted by a same transmitting terminal are the same.

In an embodiment, a sequence $r(m)$ transmitted by the first $N_{symb}^{prsb} - 1$ symbols in a PRS resource block is generated in a following way:

$$r_{l,n_s}(m) = \frac{1}{\sqrt{2}}\big(1 - 2\cdot c(2m)\big) + j\frac{1}{\sqrt{2}}\big(1 - 2\cdot c(2m+1)\big), \quad m = 0,1,\ldots, xN_{RB}^{max,DL} - 1$$

An initial value of a sequence $c(i)$ is determined according to at least one of:

$$c_{init} = 2^{26}\cdot\left\lfloor N_{ID}^{PRS}/256 \right\rfloor + 2^8\cdot\left(\left(N_{symb}^{prsb}n_{hf} + \left(N_{symb}^{\cdot slot}n_{s,f}^{u} + l + 1 - s_i\right)\bmod N_{symb}^{prsb} + 1\right)\cdot\left(2\cdot\left(N_{ID}^{PRS}\bmod 256\right) + 1\right)\right)$$
$$+ \left(N_{ID}^{PRS}\bmod 256\right);$$

$$c_{\text{init}} = 2^{25} \cdot \left\lfloor N_{\text{ID}}^{\text{PRS}} /128 \right\rfloor + 2^{8} \cdot \left( \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 \cdot \left( N_{\text{ID}}^{\text{PRS}} \bmod 128 \right) + 1 \right) \right)$$
$$+ 2 \left( N_{\text{ID}}^{\text{PRS}} \bmod 128 \right) + N_{cp};$$

$$c_{\text{init}} = 2^{26} \cdot \left\lfloor N_{\text{ID}}^{\text{PRS}} /256 \right\rfloor + 2^{8} \cdot \left( \left( \left( N_{symb}^{slot} n_{s,f}^{u} + l + 1 - s_i \right) \bmod N_{symb}^{prsb} + 1 \right) \cdot \left( 2 \cdot \left( N_{\text{ID}}^{\text{PRS}} \bmod 256 \right) + 1 \right) \right)$$
$$+ \left( N_{\text{ID}}^{\text{PRS}} \bmod 256 \right);$$

$$c_{\text{init}} = 2^{25} \cdot \left\lfloor N_{\text{ID}}^{\text{PRS}} /128 \right\rfloor + 2^{8} \cdot \left( \left( \left( N_{symb}^{slot} n_{s,f}^{u} + l + 1 - s_i \right) \bmod N_{symb}^{prsb} + 1 \right) \cdot \left( 2 \cdot \left( N_{\text{ID}}^{\text{PRS}} \bmod 128 \right) + 1 \right) \right)$$
$$+ 2 \left( N_{\text{ID}}^{\text{PRS}} \bmod 128 \right) + N_{cp};$$

$$c_{init} = \left( 2^{13} \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 N_{ID}^{PRS} + 1 \right) + N_{ID}^{PRS} \right) \bmod 2^{31};$$

$$c_{\text{init}} = 2^{13} \cdot \left( \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 \cdot N_{\text{ID}}^{\text{PRS}} + 1 \right) \right) + N_{\text{ID}}^{\text{PRS}}$$

where $n_{s,f}^{u}$ is a slot index in a radio frame; $l$ is a symbol index in a slot; $N_{symb}^{prsb}$ is a total number of symbols included in a PRS resource block; $N_{symb}^{slot}$ is a total number of symbols included in a slot; $n_{hf}$ represents a number of a half frame, $n_{hf}$=0 indicates the first half frame of one subframe and $n_{hf}$=1 indicates the remaining half frame of the subframe; $s_i$ is a position of a first symbol in a corresponding PRS resource block; $N_{\text{ID}}^{\text{PRS}} \in \{0, 1, \ldots, 8191\}$ is a PRS ID for generating the initial value, the PRS ID may be configured by an upper layer, and the PRS ID is equal to a cell ID $N_{\text{ID}}^{\text{cell}}$ if the upper layer does not configure the PRS ID; and x is related to a PRS in time domain and is a preset value configured by the upper layer;

$$N_{\text{CP}} = \begin{cases} 1 & \text{Normal CP} \\ 0 & \text{Extended CP} \end{cases}.$$

In an embodiment, a signal transmitted by the last symbol in the PRS resource block includes the resource block ID information.

In an embodiment, a sequence $r(m)$ transmitted by the last symbol in the PRS resource block is generated in a following way:

$$r_{l,n_s}(m) = \frac{1}{\sqrt{2}} \left( 1 - 2 \cdot c(2m) \right) + j \frac{1}{\sqrt{2}} \left( 1 - 2 \cdot c(2m+1) \right), \quad m = 0, 1, \ldots, x N_{\text{RB}}^{\text{max,DL}} - 1$$

An initial value of a sequence $c(i)$ is determined according to at least one of:

$$c_{\text{init}} = 2^{26} \cdot \left\lfloor N_{\text{ID}}^{\text{PRS}} /256 \right\rfloor + 2^{20} \cdot i_{prs} + 2^{8} \cdot \left( \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 \cdot \left( N_{\text{ID}}^{\text{PRS}} \bmod 256 \right) + 1 \right) \right)$$
$$+ \left( N_{\text{ID}}^{\text{PRS}} \bmod 256 \right);$$

$$c_{\text{init}} = 2^{25} \cdot \left\lfloor N_{\text{ID}}^{\text{PRS}} /128 \right\rfloor + 2^{19} \cdot i_{prs} + 2^{8} \cdot \left( \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 \cdot \left( N_{\text{ID}}^{\text{PRS}} \bmod 128 \right) + 1 \right) \right)$$
$$+ 2 \left( N_{\text{ID}}^{\text{PRS}} \bmod 128 \right) + N_{cp};$$

$$c_{init} = \left( 2^{13} \cdot \left( N_{symb}^{slot} n_{s,f}^{u} + l + 1 \right) \left( 2 N_{ID}^{PRS} + 1 \right) + N_{ID}^{PRS} \right) \bmod 2^{31};$$

$$c_{Init} = \left(2^{13} \cdot \left(i_{prs} + 1\right) \cdot \left(2N_{ID}^{PRS} + 1\right) + N_{ID}^{PRS}\right) \bmod 2^{31};$$

$$c_{Init} = 2^{12} \left(i_{prs} + 1\right) \cdot \left(2\left(N_{ID}^{PRS} \bmod 4096\right) + 1\right) + \left(N_{ID}^{PRS} \bmod 4096\right);$$

$$c_{Init} = 2^{13} \left(i_{prs} + 1\right) \cdot \left(2\left(N_{ID}^{PRS} \bmod 4096\right) + 1\right) + 2\left(N_{ID}^{PRS} \bmod 4096\right) + N_{cp};$$

$$c_{Init} = 2^{12} \left(i_{prs} + 1\right)\left(\left\lfloor N_{ID}^{PRS} / N_{symb}^{prsb} \right\rfloor + 1\right) + 2^{6}\left(i_{prs} + 1\right) + \left(N_{ID}^{PRS} \bmod N_{symb}^{prsb}\right)$$

where $i_{prs}$ is an ID index of the PRS resource block and is less than or equal to $N_{symb}^{prsb}$; $n_{s,f}^{u}$ is a slot index in a radio frame; $l$ is a symbol index in a slot; $N_{symb}^{prsb}$ is a total number of symbols included in a PRS resource block; $N_{symb}^{slot}$ is a total number of symbols included in a slot; $n_{hf}$ represents a number of a half frame, $n_{hf}$=0 indicates the first half frame of one subframe and $n_{hf}$=1 indicates the remaining half frame of the subframe; $s_i$ is a position of a first symbol in a corresponding PRS resource block; $N_{ID}^{PRS} \in \{0,1,...,8191\}$ is a PRS ID for generating the initial value, the PRS ID may be configured by an upper layer, and the PRS ID is equal to a cell ID $N_{ID}^{cell}$ if the upper layer does not configure the PRS ID; and x is related to a PRS in time domain and is a preset value configured by the upper layer;

$$N_{CP} = \begin{cases} 1 & \text{Normal CP} \\ 0 & \textit{Extended CP} \end{cases}.$$

According to the embodiments of the present disclosure, the time-frequency resources are reasonably allocated to the PRS resource blocks which include the resource block ID information, so that the PRSs can be transmitted by means of polling beams.

As shown in Fig. 14, an embodiment of the present disclosure further provides a receiving device for PRS, including a determination module 41 and a detecting and receiving module 42.

The determination module 41 is configured to determine time-frequency resources via which PRS resource blocks are transmitted according to subcarrier spacing.

The detecting and receiving module 42 is configured to detect and receive the PRS resource blocks according to the determined time-frequency resources, with each PRS resource block including resource block ID information.

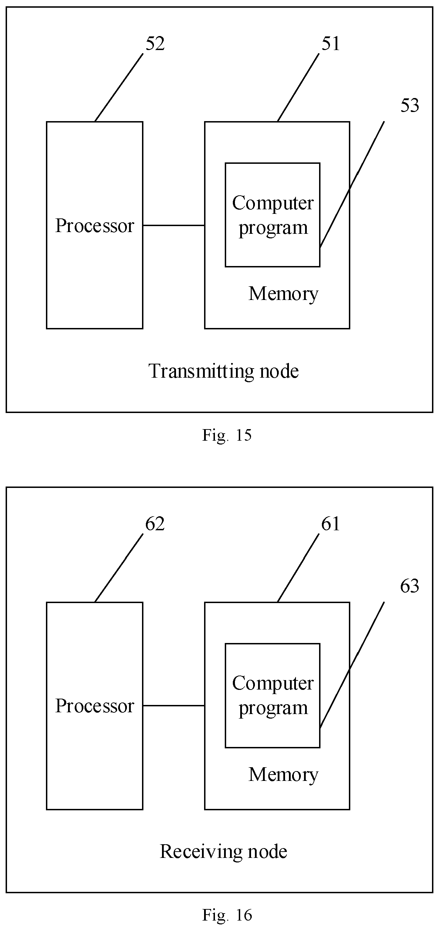

As shown in Fig. 15, an embodiment of the present disclosure further provides a transmitting node, including: a memory 51, a processor 52, and a computer program 53 which is stored on the memory 51 and is executable by the processor 52. When executing the program 53, the processor 52 performs the transmitting method for PRS according to the present disclosure.

The transmitting node may be a device configured to transmit a PRS, such as a base station.

As shown in Fig. 16, an embodiment of the present disclosure further provides a receiving node, including: a memory 61, a processor 62 and a computer program 63 which is stored on the memory 61 and is executable by the processor 62. When executing the program 63, the processor 62 performs the receiving method for PRS according to the present disclosure.

The receiving node may be a device configured to receive a PRS, such as a User Equipment (UE).

An embodiment of the present disclosure further provides a computer-readable storage medium having computer-executable instructions stored therein. The computer-executable instructions are configured to perform the transmitting method for PRS according to the present disclosure.

An embodiment of the present disclosure further provides a computer-readable storage medium having computer-executable instructions stored therein. The computer-executable instructions are configured to perform the receiving method for PRS according to the present disclosure.

In the embodiments, the above storage media may include, but are not limited to, various media capable of storing program codes, such as a Universal Serial Bus Flash Disk (USB flash disk), a Read-Only Memory (ROM), a Random Access Memory (RAM), a mobile hard disk, a magnetic disk and an optical disc.

It should be understood by those of ordinary skill in the art that the functional modules/units in all or some of the steps, the systems, and the devices in the methods disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or step may be performed through cooperation of several physical components. Some or all of the components may be implemented as software executed by a processor, such as a digital signal processor or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those of ordinary skill in the art, the term "computer storage medium" includes volatile/nonvolatile and removable/non-removable media used in any method or technology for storing information (such as computer-readable instructions, data structures, program modules and other data). The computer storage media include, but are not limited to, an RAM, an ROM, an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other media which can be configured to store the desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

**Claims**

1. A transmitting method for transmitting blocks of positioning reference signal, PRS, resources, the method performed by a transmitting node, the method comprising:

   allocating (101) time-frequency resources to PRS resource blocks according to subcarrier spacing, wherein a position allocated to a first symbol in each PRS resource block is different for different subcarrier spacing; and
   transmitting (102) the PRS resource blocks according to the allocated time-frequency resources, wherein each PRS resource block comprises PRS resource block identification information.

2. The method of claim 1, wherein the step of allocating (101) the time-frequency resources to the PRS resource blocks according to the subcarrier spacing comprises:
   allocating the time-frequency resources to the PRS resource blocks with a half subframe taken as a scheduling period.

3. The method of claim 1, wherein the step of allocating (101) the time-frequency resources to the PRS resource blocks according to the subcarrier spacing comprises:

   in response to the subcarrier spacing of 15kHZ, allocating a position $\{2,8\}+14\cdot n$ to a first symbol in each PRS resource block, where n is a natural number less than or equal to 4,
   preferably, in response to a carrier frequency being less than or equal to 3GHz, $n = 2, 3$; in response to the carrier frequency is greater than 3GHz and less than or equal to 6GHz, $n = 1,2,3,4$.

4. The method of claim 1, wherein the step of allocating (101) the time-frequency resources to the PRS resource blocks according to the subcarrier spacing comprises:

   in response to the subcarrier spacing of 30kHZ, allocating a position $\{2, 8\}+14\cdot n$ to a first symbol in each PRS resource block, where n is a natural number less than or equal to 7,
   preferably, in a scenario where Frequency Division Duplexing, called FDD, is adopted, in response to a carrier frequency being less than or equal to 3GHz, $n = 2, 3$; in response to the carrier frequency being greater than 3GHz and less than or equal to 6GHz, $n = 4, 5, 6, 7$; and
   in a scenario where Time Division Duplexing, called TDD, is adopted, in response to the carrier frequency being less than or equal to 2.4GHz, $n = 2, 3$; in response to the carrier frequency being greater than 2.4GHz and less than or equal to 6GHz, $n=4,5,6,7$.

5. The method of claim 1, wherein the step of allocating (101) the time-frequency resources to the PRS resource blocks according to the subcarrier spacing comprises:

   in response to the subcarrier spacing of 120kHZ, allocating a position $\{4, 8, 16, 20\} + 28\cdot n$ to a first symbol in each PRS resource block, where $n =1, 2, 3, 4, 6, 7, 8, 9, 11, 12, 13, 14, 16, 17, 18, 19$; or

in response to the subcarrier spacing of 240kHZ, allocating a position {4,8,16,20,32,36,40,44} + 56·$n$ to a first symbol in each PRS resource block, where

$$n = 10,11,12,13,15,16,17,18.$$

6. The method of claim 1, wherein

each of the PRS resource blocks comprises $N_{symb}^{prsb}$ continuous or discontinuous symbols, with $N_{symb}^{prsb} = 1,2,3,4,5,6$.

7. The method of claim 6, wherein

within one scheduling period, signals transmitted by the first $N_{symb}^{prsb} - 1$ symbols in PRS resource blocks transmitted by a same transmitting terminal are the same.

8. The method of claim 7, wherein

a sequence $r(m)$ transmitted by the first $N_{symb}^{prsb} - 1$ symbols in a PRS resource block is generated in a following way:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,\ldots,xN_{RB}^{max,DL} - 1$$

wherein an initial value $c_{init}$ of a sequence $c(i)$ is determined according to at least one of:

$$c_{init} = 2^{26} \cdot \left\lfloor N_{ID}^{PRS}/256 \right\rfloor + 2^8 \cdot \left(\left(N_{symb}^{prsb}n_{hf} + \left(N_{symb}^{slot}n_{s,f}^u + l + 1 - s_i\right)\bmod N_{symb}^{prsb} + 1\right) \cdot \left(2 \cdot \left(N_{ID}^{PRS}\bmod 256\right) + 1\right)\right) + \left(N_{ID}^{PRS}\bmod 256\right);$$

$$c_{init} = 2^{25} \cdot \left\lfloor N_{ID}^{PRS}/128 \right\rfloor + 2^8 \cdot \left(\left(N_{symb}^{prsb}n_{hf} + \left(N_{symb}^{slot}n_{s,f}^u + l + 1 - s_i\right)\bmod N_{symb}^{prsb} + 1\right) \cdot \left(2 \cdot \left(N_{ID}^{PRS}\bmod 128\right) + 1\right)\right) + 2\left(N_{ID}^{PRS}\bmod 128\right) + N_{cp};$$

$$c_{init} = 2^{26} \cdot \left\lfloor N_{ID}^{PRS}/256 \right\rfloor + 2^8 \cdot \left(\left(\left(N_{symb}^{slot}n_{s,f}^u + l + 1 - s_i\right)\bmod N_{symb}^{prsb} + 1\right) \cdot \left(2 \cdot \left(N_{ID}^{PRS}\bmod 256\right) + 1\right)\right) + \left(N_{ID}^{PRS}\bmod 256\right);$$

$$c_{init} = 2^{25} \cdot \left\lfloor N_{ID}^{PRS}/128 \right\rfloor + 2^8 \cdot \left(\left(\left(N_{symb}^{slot}n_{s,f}^u + l + 1 - s_i\right)\bmod N_{symb}^{prsb} + 1\right) \cdot \left(2 \cdot \left(N_{ID}^{PRS}\bmod 128\right) + 1\right)\right) + 2\left(N_{ID}^{PRS}\bmod 128\right) + N_{cp};$$

$$c_{init} = \left(2^{13}\left(N_{symb}^{prsb}n_{hf} + \left(N_{symb}^{slot}n_{s,f}^u + l + 1 - s_i\right)\bmod N_{symb}^{prsb} + 1\right) \cdot \left(2N_{ID}^{PRS} + 1\right) + N_{ID}^{PRS}\right)\bmod 2^{31};$$

$$c_{init} = 2^{13} \cdot \left(\left(N_{symb}^{prsb}n_{hf} + \left(N_{symb}^{slot}n_{s,f}^u + l + 1 - s_i\right)\bmod N_{symb}^{prsb} + 1\right) \cdot \left(2 \cdot N_{ID}^{PRS} + 1\right)\right) + N_{ID}^{PRS};$$

where $n_{s,f}^u$ is a slot index in a radio frame; $l$ is a symbol index in a slot; $N_{symb}^{prsb}$ is a total number of symbols included in a PRS resource block; $N_{symb}^{slot}$ is a total number of symbols included in a slot; $n_{hf}$ represents a number of a half frame, $n_{hf}$=0 indicates the first half frame of one subframe and $n_{hf}$=1 indicates the remaining half frame of the subframe; $s_i$ is a position of a first symbol in a corresponding PRS resource block; $N_{\text{ID}}^{\text{PRS}} \in \{0,1,...,8191\}$ is a PRS identification for generating the initial value; and x is related to a PRS in time domain and is a preset value;

$$N_{\text{CP}} = \begin{cases} 1 & \text{Normal CP} \\ 0 & \textit{Extended CP} \end{cases}.$$

9.  The method of claim 6, wherein
    a signal transmitted by the last symbol in the PRS resource block comprises the resource block identification information.

10. The method of claim 9, wherein

    a sequence $r(m)$ transmitted by the last symbol in the PRS resource block is generated in a following way:

    $$r_{l,n_s}(m) = \frac{1}{\sqrt{2}}\left(1-2\cdot c(2m)\right) + j\frac{1}{\sqrt{2}}\left(1-2\cdot c(2m+1)\right), \quad m = 0,1,...,xN_{\text{RB}}^{\text{max,DL}} - 1$$

    wherein an initial value $c_{\text{init}}$ of a sequence $c(i)$ is determined according to at least one of:

    $$c_{\text{init}} = 2^{26}\cdot\left\lfloor N_{\text{ID}}^{\text{PRS}}/256 \right\rfloor + 2^{20}\cdot i_{prs} + 2^8\cdot\left(\left(N_{symb}^{prsb}n_{hf} + \left(N_{symb}^{slot}n_{s,f}^u + l + 1 - s_i\right)\bmod N_{symb}^{prsb} + 1\right)\cdot\left(2\cdot\left(N_{\text{ID}}^{\text{PRS}}\bmod 256\right)+1\right)\right) + \left(N_{\text{ID}}^{\text{PRS}}\bmod 256\right);$$

    $$c_{\text{init}} = 2^{25}\cdot\left\lfloor N_{\text{ID}}^{\text{PRS}}/128 \right\rfloor + 2^{19}\cdot i_{prs} + 2^8\cdot\left(\left(N_{symb}^{prsb}n_{hf} + \left(N_{symb}^{slot}n_{s,f}^u + l + 1 - s_i\right)\bmod N_{symb}^{prsb} + 1\right)\cdot\left(2\cdot\left(N_{\text{ID}}^{\text{PRS}}\bmod 128\right)+1\right)\right) + 2\left(N_{\text{ID}}^{\text{PRS}}\bmod 128\right)+N_{cp};$$

    $$c_{init} = \left(2^{13}\cdot\left(N_{symb}^{slot}n_{s,f}^u + l + 1\right)\left(2N_{ID}^{PRS}+1\right)+N_{ID}^{PRS}\right)\bmod 2^{31};$$

    $$c_{init} = \left(2^{13}\cdot\left(i_{prs}+1\right)\cdot\left(2N_{ID}^{PRS}+1\right)+N_{ID}^{PRS}\right)\bmod 2^{31};$$

    $$c_{init} = 2^{12}\left(i_{prs}+1\right)\cdot\left(2\left(N_{ID}^{PRS}\bmod 4096\right)+1\right)+\left(N_{ID}^{PRS}\bmod 4096\right);$$

    $$c_{init} = 2^{13}\left(i_{prs}+1\right)\cdot\left(2\left(N_{ID}^{PRS}\bmod 4096\right)+1\right)+2\left(N_{ID}^{PRS}\bmod 4096\right)+N_{cp};$$

    $$c_{init} = 2^{12}\left(i_{prs}+1\right)\left(\left\lfloor N_{ID}^{PRS}/N_{symb}^{prsb} \right\rfloor+1\right)+2^6\left(i_{prs}+1\right)+\left(N_{ID}^{PRS}\bmod N_{symb}^{prsb}\right);$$

    where $i_{prs}$ is an identification index of the PRS resource block and is less than or equal to $N_{symb}^{prsb}$; $n_{s,f}^u$ is a slot index in a radio frame; $l$ is a symbol index in a slot; $N_{symb}^{prsb}$ is a total number of symbols included in a PRS resource block; $N_{symb}^{slot}$ is a total number of symbols included in a slot; $n_{hf}$ represents a number of a half frame, $n_{hf}$=0 indicates the first half frame of one subframe and $n_{hf}$=1 indicates the remaining half frame of the subframe; $s_i$ is a position of a first symbol in a corresponding PRS resource block; $N_{\text{ID}}^{\text{PRS}} \in \{0,1,...,8191\}$ is a PRS identification for generating the initial value; and x is related to a PRS in time domain and is a preset value;

$$N_{\mathrm{CP}} = \begin{cases} 1 & \mathrm{Normal\ CP} \\ 0 & \mathit{Extended}\ \mathrm{CP} \end{cases}.$$

11. A receiving method for receiving blocks of positioning reference signal, PRS, resources, the method performed by a receiving node, the method comprising:

determining (201) time-frequency resources via which PRS resource blocks are transmitted according to subcarrier spacing, wherein a position allocated to a first symbol in each PRS resource block is different for different subcarrier spacing; and
detecting and receiving (202) the PRS resource blocks according to the determined time-frequency resources, wherein each PRS resource block comprises PRS resource block identification information.

12. A transmitting node, comprising means configured to perform the method of any one of claims 1 to 10.

13. A computer-readable storage medium comprising instructions which, when executed by a computer, cause the computer to carry out the method of any one of claims 1 to 10.

14. A receiving node, comprising means configured to perform the method of claim 11.

15. A computer-readable storage medium comprising instructions which, when executed by a computer, cause the computer to carry out the method of claim 11.

**Patentansprüche**

1. Übertragungsverfahren zum Übertragen von Blöcken von Positionierungs-Referenzsignal-, PRS-, Ressourcen, wobei das Verfahren von einem übertragenden Knoten durchgeführt wird, wobei das Verfahren umfasst:

Zuweisen (101) von Zeit-Frequenz-Ressourcen zu PRS-Ressourcenblöcken gemäß einem Unterträgerabstand, wobei eine Position, die einem ersten Symbol in jedem PRS-Ressourcenblock zugewiesen ist, für einen unterschiedlichen Unterträgerabstand unterschiedlich ist; und
Übertragen (102) der PRS-Ressourcenblöcke gemäß den zugewiesenen Zeit-Frequenz-Ressourcen, wobei jeder PRS-Ressourcenblock PRS-Ressourcenblock-Identifikationsinformationen umfasst.

2. Verfahren nach Anspruch 1, wobei der Schritt des Zuweisens (101) der Zeit-Frequenz-Ressourcen zu den PRS-Ressourcenblöcken gemäß dem Unterträgerabstand umfasst:
Zuweisen der Zeit-Frequenz-Ressourcen zu den PRS-Ressourcenblöcken mit einem halben Unterrahmen, der als Planungszeitraum genommen wird.

3. Verfahren nach Anspruch 1, wobei der Schritt des Zuweisens (101) der Zeit-Frequenz-Ressourcen zu den PRS-Ressourcenblöcken gemäß dem Unterträgerabstand umfasst:

in Reaktion auf den Unterträgerabstand von 15 kHz, Zuweisen einer Position $\{2,8\}+14\cdot n$ zu einem ersten Symbol in jedem PRS-Ressourcenblock, wobei n eine natürliche Zahl kleiner oder gleich 4 ist, vorzugsweise in Reaktion darauf, dass eine Trägerfrequenz kleiner oder gleich 3 GHz ist, $n = 2,3$ ; in Reaktion darauf, dass die Trägerfrequenz größer als 3 GHz und kleiner oder gleich 6 GHz ist, $n =1,2,3,4$.

4. Verfahren nach Anspruch 1, wobei der Schritt des Zuweisens (101) der Zeit-Frequenz-Ressourcen zu den PRS-Ressourcenblöcken gemäß dem Unterträgerabstand umfasst:

in Reaktion auf den Unterträgerabstand von 30 kHz, Zuweisen einer Position $\{2,8\}+14\cdot n$ zu einem ersten Symbol in jedem PRS-Ressourcenblock, wobei n eine natürliche Zahl kleiner oder gleich 7 ist, vorzugsweise in einem Szenario, in dem Frequenzteilung-Duplexing, genannt FDD, angewendet wird, in Reaktion darauf, dass eine Trägerfrequenz kleiner oder gleich 3 GHz ist, $n=2,3$; in Reaktion darauf, dass die Trägerfrequenz größer als 3 GHz und kleiner oder gleich 6 GHz ist, $n$ = 4,5,6,7; und
in einem Szenario, in dem Zeitteilung-Duplexing, genannt TDD, angewendet wird, in Reaktion darauf, dass die Trägerfrequenz kleiner oder gleich 2,4 GHz ist, $n$ = 2,3; in Reaktion darauf, dass die Trägerfrequenz größer als 2,4 GHz und kleiner oder gleich 6 GHz ist, $n$ =4,5,6, 7.

5. Verfahren nach Anspruch 1, wobei der Schritt des Zuweisens (101) der Zeit-Frequenz-Ressourcen zu den PRS-Ressourcenblöcken gemäß dem Unterträgerabstand umfasst:

in Reaktion auf den Unterträgerabstand von 120 kHz, Zuweisen einer Position $\{4,8,16,20\}+28 \cdot n$ zu einem ersten Symbol in jedem PRS-Ressourcenblock, wobei $n$ =1,2,3,4,6,7,8,9,11,12,13,14,16,17,18,19; oder
in Reaktion auf den Unterträgerabstand von 240 kHz, Zuweisen einer Position $\{4,8,16,20,32,36,40,44\} + 56 \cdot n$ zu einem ersten Symbol in jedem PRS-Ressourcenblock, wobei $n$ =10,11,12,13,15,16,17,18.

6. Verfahren nach Anspruch 1, wobei

jeder der PRS-Ressourcenblöcke $N_{symb}^{prsb}$ kontinuierliche oder diskontinuierliche Symbole umfasst, mit

$$N_{symb}^{prsb} = 1, 2, 3, 4, 5, 6 \ .$$

7. Verfahren nach Anspruch 6, wobei

innerhalb eines Planungszeitraums Signale, die von den ersten $N_{symb}^{prsb} - 1$ Symbolen in PRS-Ressourcenblöcken übertragen werden, die von einem gleichen übertragenden Endgerät übertragen werden, gleich sind.

8. Verfahren nach Anspruch 7, wobei

eine Sequenz $r(m)$, die von den ersten $N_{symb}^{prsb} - 1$ Symbolen in einem PRS-Ressourcenblock übertragen wird, auf folgende Weise erzeugt wird:

$$r_{l,n_s}(m) = \frac{1}{\sqrt{2}}\left(1 - 2 \cdot c(2m)\right) + j \frac{1}{\sqrt{2}}\left(1 - 2 \cdot c(2m+1)\right), \quad m = 0,1,...,x N_{RB}^{\max, DL} - 1$$

wobei ein Anfangswert $c_{init}$ einer Sequenz $c(i)$ gemäß mindestens einem von Folgendem bestimmt wird:

$$c_{init} = 2^{26} \cdot \left\lfloor N_{ID}^{PRS}/256 \right\rfloor + 2^8 \cdot \left(\left(N_{symb}^{prsb} n_{hf} + \left(N_{symb}^{slot} n_{s,f}^u + l + 1 - s_i\right) \bmod N_{symb}^{prsb} + 1\right) \cdot \left(2 \cdot \left(N_{ID}^{PRS} \bmod 256\right) + 1\right)\right) + \left(N_{ID}^{PRS} \bmod 256\right);$$

$$c_{init} = 2^{25} \cdot \left\lfloor N_{ID}^{PRS}/128 \right\rfloor + 2^8 \cdot \left(\left(N_{symb}^{prsb} n_{hf} + \left(N_{symb}^{slot} n_{s,f}^u + l + 1 - s_i\right) \bmod N_{symb}^{prsb} + 1\right) \cdot \left(2 \cdot \left(N_{ID}^{PRS} \bmod 128\right) + 1\right)\right) + 2\left(N_{ID}^{PRS} \bmod 128\right) + N_{cp};$$

$$c_{init} = 2^{26} \cdot \left\lfloor N_{ID}^{PRS}/256 \right\rfloor + 2^8 \cdot \left(\left(\left(N_{symb}^{slot} n_{s,f}^u + l + 1 - s_i\right) \bmod N_{symb}^{prsb} + 1\right) \cdot \left(2 \cdot \left(N_{ID}^{PRS} \bmod 256\right) + 1\right)\right) + \left(N_{ID}^{PRS} \bmod 256\right);$$

$$c_{init} = 2^{25} \cdot \left\lfloor N_{ID}^{PRS}/128 \right\rfloor + 2^8 \cdot \left(\left(\left(N_{symb}^{slot} n_{s,f}^u + l + 1 - s_i\right) \bmod N_{symb}^{prsb} + 1\right) \cdot \left(2 \cdot \left(N_{ID}^{PRS} \bmod 128\right) + 1\right)\right) + 2\left(N_{ID}^{PRS} \bmod 128\right) + N_{cp};$$

$$c_{init} = \left(2^{13}\left(N_{symb}^{prsb} n_{hf} + \left(N_{symb}^{slot} n_{s,f}^u + l + 1 - s_i\right) \bmod N_{symb}^{prsb} + 1\right) \cdot \left(2 N_{ID}^{PRS} + 1\right) + N_{ID}^{PRS}\right) \bmod 2^{31};$$

$$c_{\text{init}} = 2^{13} \cdot \left( \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 \cdot N_{\text{ID}}^{\text{PRS}} + 1 \right) \right) + N_{\text{ID}}^{\text{PRS}} ;$$

wobei $n_{s,f}^{u}$ ein Speicherplatzindex in einem Funk-Rahmen ist; *l* ein Symbolindex in einem Speicherplatz ist; $N_{symb}^{prsb}$ eine Gesamtanzahl von Symbolen ist, die in einem PRS-Ressourcenblock eingeschlossen sind; $N_{symb}^{slot}$ eine Gesamtanzahl von Symbolen ist, die in einem Speicherplatz eingeschlossen sind; $n_{hf}$ eine Anzahl eines halben Rahmens repräsentiert, $n_{hf}$ =0 den ersten halben Rahmen eines Unterrahmens angibt und $n_{hj}$ =1 den verbleibenden halben Rahmen des Unterrahmens angibt; $s_i$ eine Position eines ersten Symbols in einem entsprechenden PRS-Ressourcenblock ist; $N_{\text{ID}}^{\text{PRS}} \in \{0,1,...,8191\}$ eine PRS-Identifikation zum Erzeugen des Anfangswerts ist; und x sich auf ein PRS im Zeitbereich bezieht und ein voreingestellter Wert ist;

$$N_{\text{CP}} = \begin{cases} 1 & \text{Normal CP} \\ 0 & \textit{Extended CP} \end{cases} .$$

**9.** Verfahren nach Anspruch 6, wobei
ein Signal, das von dem letzten Symbol in dem PRS-Ressourcenblock übertragen wird, die Ressourcenblock-Identifikationsinformationen umfasst.

**10.** Verfahren nach Anspruch 9, wobei

eine Sequenz *r(m)*, die von dem letzten Symbol in dem PRS-Ressourcenblock übertragen wird, auf folgende Weise erzeugt wird:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,...,x N_{\text{RB}}^{\text{max, DL}} - 1$$

wobei ein Anfangswert [:39:] einer Sequenz [:40:] gemäß mindestens einem von Folgendem bestimmt wird:

$$c_{\text{init}} = 2^{26} \cdot \left\lfloor N_{\text{ID}}^{\text{PRS}} / 256 \right\rfloor + 2^{20} \cdot i_{prs} + 2^{8} \cdot \left( \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 \cdot \left( N_{\text{ID}}^{\text{PRS}} \bmod 256 \right) + 1 \right) \right) + \left( N_{\text{ID}}^{\text{PRS}} \bmod 256 \right);$$

$$c_{\text{init}} = 2^{25} \cdot \left\lfloor N_{\text{ID}}^{\text{PRS}} / 128 \right\rfloor + 2^{19} \cdot i_{prs} + 2^{8} \cdot \left( \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 \cdot \left( N_{\text{ID}}^{\text{PRS}} \bmod 128 \right) + 1 \right) \right) + 2 \left( N_{\text{ID}}^{\text{PRS}} \bmod 128 \right) + N_{cp};$$

$$c_{init} = \left( 2^{13} \cdot \left( N_{symb}^{slot} n_{s,f}^{u} + l + 1 \right) \left( 2 N_{ID}^{PRS} + 1 \right) + N_{ID}^{PRS} \right) \bmod 2^{31} ;$$

$$c_{init} = \left( 2^{13} \cdot \left( i_{prs} + 1 \right) \cdot \left( 2 N_{ID}^{PRS} + 1 \right) + N_{ID}^{PRS} \right) \bmod 2^{31} ;$$

$$c_{init} = 2^{12} \left( i_{prs} + 1 \right) \cdot \left( 2 \left( N_{ID}^{PRS} \bmod 4096 \right) + 1 \right) + \left( N_{ID}^{PRS} \bmod 4096 \right);$$

$$c_{init} = 2^{13} \left( i_{prs} + 1 \right) \cdot \left( 2 \left( N_{ID}^{PRS} \bmod 4096 \right) + 1 \right) + 2 \left( N_{ID}^{PRS} \bmod 4096 \right) + N_{cp} ;$$

$$c_{init} = 2^{12}\left(i_{prs}+1\right)\left(\left\lfloor N_{ID}^{PRS}/N_{symb}^{prsb}\right\rfloor+1\right)+2^6\left(i_{prs}+1\right)+\left(N_{ID}^{PRS} \bmod N_{symb}^{prsb}\right);$$

wobei $i_{prs}$ ein Identifikationsindex des PRS-Ressourcenblocks ist und kleiner oder gleich $N_{symb}^{prsb}$ ist; $n_{s,f}^{u}$ ein Speicherplatzindex in einem Funk-Rahmen ist; $l$ ein Symbolindex in einem Speicherplatz ist; $N_{symb}^{prsb}$ eine Gesamtanzahl von Symbolen ist, die in einem PRS-Ressourcenblock eingeschlossen sind; $N_{symb}^{slot}$ eine Gesamtanzahl von Symbolen ist, die in einem Speicherplatz eingeschlossen sind; $n_{hf}$ eine Anzahl eines halben Rahmens repräsentiert, $n_{hf}$=0 den ersten halben Rahmen eines Unterrahmens angibt und $n_{hf}$=1 den verbleibenden halben Rahmen des Unterrahmens angibt; $s_i$ eine Position eines ersten Symbols in einem entsprechenden PRS-Ressourcenblock ist; $N_{ID}^{PRS} \in \{0,1,...,8191\}$ eine PRS-Identifikation zum Erzeugen des Anfangswerts ist; und x sich auf ein PRS im Zeitbereich bezieht und ein voreingestellter Wert ist;

$$N_{CP} = \begin{cases} 1 & \text{Normal CP} \\ 0 & \textit{Extended CP} \end{cases}.$$

11. Empfangsverfahren zum Empfangen von Blöcken von Positionierungs-Referenzsignal-, PRS-, Ressourcen, wobei das Verfahren von einem empfangenden Knoten durchgeführt wird, wobei das Verfahren umfasst:

Bestimmen (201) von Zeit-Frequenz-Ressourcen, über die PRS-Ressourcenblöcke gemäß einem Unterträgerabstand übertragen werden, wobei eine Position, die einem ersten Symbol in jedem PRS-Ressourcenblock zugewiesen ist, für einen unterschiedlichen Unterträgerabstand unterschiedlich ist; und
Detektieren und Empfangen (202) der PRS-Ressourcenblöcke gemäß den bestimmten Zeit-Frequenz-Ressourcen, wobei jeder PRS-Ressourcenblock PRS-Ressourcenblock-Identifikationsinformationen umfasst.

12. Übertragender Knoten, umfassend Mittel, die zum Durchführen des Verfahrens nach einem der Ansprüche 1 bis 10 konfiguriert sind.

13. Computerlesbares Speichermedium, umfassend Anweisungen, die bei Ausführung durch einen Computer bewirken, dass der Computer das Verfahren nach einem der Ansprüche 1 bis 10 ausführt.

14. Empfangender Knoten, umfassend Mittel, die zum Durchführen des Verfahrens nach Anspruch 11 konfiguriert sind.

15. Computerlesbares Speichermedium, umfassend Anweisungen, die bei Ausführung durch einen Computer bewirken, dass der Computer das Verfahren nach Anspruch 11 ausführt.


**Revendications**

1. Procédé de transmission pour envoyer des blocs de ressources de signal de référence de positionnement, PRS, le procédé étant réalisé par un nœud de transmission, le procédé comprenant les étapes consistant à :

attribuer (101) des ressources temps-fréquence à des blocs de ressources PRS en fonction d'un espacement de sous-porteuses, dans lequel une position attribuée à un premier symbole dans chaque bloc de ressources PRS est différente pour un espacement de sous-porteuses différent ; et
envoyer (102) les blocs de ressources PRS en fonction des ressources temps-fréquence attribuées, dans lequel chaque bloc de ressources PRS comprend des informations d'identification de bloc de ressources PRS.

2. Procédé selon la revendication 1, dans lequel l'étape consistant à attribuer (101) les ressources temps-fréquence aux blocs de ressources PRS en fonction de l'espacement de sous-porteuses comprend les étapes consistant à :
attribuer les ressources temps-fréquence aux blocs de ressources PRS avec une demi-sous-trame prise en tant que période de planification.

3. Procédé selon la revendication 1, dans lequel l'étape consistant à attribuer (101) les ressources temps-fréquence aux blocs de ressources PRS en fonction de l'espacement de sous-porteuses comprend les étapes consistant à :

en réponse à l'espacement de sous-porteuses de 15 kHZ, attribuer une position {2,8}+14·$n$ à un premier symbole dans chaque bloc de ressources PRS, où n est un nombre naturel inférieur ou égal à 4,
de préférence, en réponse au fait qu'une fréquence porteuse est inférieure ou égale à 3 GHz, $n$ = 2,3 ; en réponse au fait que la fréquence porteuse est supérieure à 3 GHz et inférieure ou égale à 6 GHz, $n$ = 1,2,3,4.

4. Procédé selon la revendication 1, dans lequel l'étape consistant à attribuer (101) les ressources temps-fréquence aux blocs de ressources PRS en fonction de l'espacement de sous-porteuses comprend les étapes consistant à :

en réponse à l'espacement de sous-porteuses de 30 kHZ, attribuer une position {2,8}+14·$n$ à un premier symbole dans chaque bloc de ressources PRS, où n est un nombre naturel inférieur ou égal à 7,
de préférence, dans un scénario dans lequel un duplexage par répartition en fréquence, appelé FDD, est adopté, en réponse au fait qu'une fréquence porteuse est inférieure ou égale à 3 GHz, $n$ = 2,3; en réponse au fait que la fréquence porteuse est supérieure à 3 GHz et inférieure ou égale à 6 GHz, $n$ = 4,5,6,7; et
dans un scénario dans lequel un duplexage par répartition dans le temps, appelé TDD, est adopté, en réponse au fait que la fréquence porteuse est inférieure ou égale à 2,4 GHz, $n$ = 2,3 ; en réponse au fait que la fréquence porteuse est supérieure à 2,4 GHz et inférieure ou égale à 6 GHz, $n$ = 4,5,6,7.

5. Procédé selon la revendication 1, dans lequel l'étape consistant à attribuer (101) les ressources temps-fréquence aux blocs de ressources PRS en fonction de l'espacement de sous-porteuses comprend les étapes consistant à :

en réponse à l'espacement de sous-porteuses de 120 kHZ, attribuer une position {4,8,16,20} + 28·$n$ à un premier symbole dans chaque bloc de ressources PRS, où $n$ =1,2,3,4,6,7,8,9,11,12,13,14,16,17,18,19 ; ou
en réponse à l'espacement de sous-porteuses de 240 kHZ, attribuer une position {4,8,16,20,32,36,40,44} + 56·$n$ à un premier symbole dans chaque bloc de ressources PRS, où $n$ =10,11,12,13,15,16,17,18.

6. Procédé selon la revendication 1, dans lequel

chacun des blocs de ressources PRS comprend $N_{symb}^{prsb}$ des symboles continus ou discontinus, avec

$$N_{symb}^{prsb} = 1, 2, 3, 4, 5, 6 .$$

7. Procédé selon la revendication 6, dans lequel dans une période de planification, des signaux envoyés par les premiers $N_{symb}^{prsb} - 1$ symboles dans des blocs de ressources PRS envoyés par un même terminal de transmission sont les mêmes.

8. Procédé selon la revendication 7, dans lequel

une séquence $r(m)$ envoyée par les premiers $N_{symb}^{prsb} - 1$ symboles dans un bloc de ressources PRS est générée de la manière suivante :

$$r_{l,n_s}(m) = \frac{1}{\sqrt{2}}(1 - 2 \cdot c(2m)) + j\frac{1}{\sqrt{2}}(1 - 2 \cdot c(2m+1)), \quad m = 0,1,...,xN_{RB}^{max,DL} - 1$$

dans lequel une valeur initiale $c_{init}$ d'une séquence $c(i)$ est déterminée selon au moins l'un parmi :

$$c_{init} = 2^{26} \cdot \left\lfloor N_{ID}^{PRS}/256 \right\rfloor + 2^8 \cdot \left(\left(N_{symb}^{prsb}n_{hf} + \left(N_{symb}^{slot}n_{s,f}^u + l + 1 - s_i\right)\bmod N_{symb}^{prsb} + 1\right) \cdot \left(2 \cdot \left(N_{ID}^{PRS}\bmod 256\right) + 1\right)\right)$$
$$+ \left(N_{ID}^{PRS}\bmod 256\right);$$

$$c_{\text{init}} = 2^{25} \cdot \left\lfloor N_{\text{ID}}^{\text{PRS}}/128 \right\rfloor + 2^{8} \cdot \left( \left( N_{symb}^{prsb} n_{hf} + \left( N_{symb}^{slot} n_{s,f}^{u} + l + 1 - s_{i} \right) \bmod N_{symb}^{prsb} + 1 \right) \cdot \left( 2 \cdot \left( N_{\text{ID}}^{\text{PRS}} \bmod 128 \right) + 1 \right) \right)$$
$$+ 2 \left( N_{\text{ID}}^{\text{PRS}} \bmod 128 \right) + N_{cp};$$

$$c_{\text{init}} = 2^{26} \cdot \left\lfloor N_{\text{ID}}^{\text{PRS}}/256 \right\rfloor + 2^{8} \cdot \left( \left( \left( N_{symb}^{slot} n_{s,f}^{u} + l + 1 - s_{i} \right) \bmod N_{symb}^{prsb} + 1 \right) \cdot \left( 2 \cdot \left( N_{\text{ID}}^{\text{PRS}} \bmod 256 \right) + 1 \right) \right)$$
$$+ \left( N_{\text{ID}}^{\text{PRS}} \bmod 256 \right);$$

$$c_{\text{init}} = 2^{25} \cdot \left\lfloor N_{\text{ID}}^{\text{PRS}}/128 \right\rfloor + 2^{8} \cdot \left( \left( \left( N_{symb}^{slot} n_{s,f}^{u} + l + 1 - s_{i} \right) \bmod N_{symb}^{prsb} + 1 \right) \cdot \left( 2 \cdot \left( N_{\text{ID}}^{\text{PRS}} \bmod 128 \right) + 1 \right) \right)$$
$$+ 2 \left( N_{\text{ID}}^{\text{PRS}} \bmod 128 \right) + N_{cp};$$

$$c_{init} = \left( 2^{13} \left( N_{symb}^{prsb} n_{hf} + \left( N_{symb}^{slot} n_{s,f}^{u} + l + 1 - s_{i} \right) \bmod N_{symb}^{prsb} + 1 \right) \cdot \left( 2 N_{ID}^{PRS} + 1 \right) + N_{ID}^{PRS} \right) \bmod 2^{31};$$

$$c_{\text{init}} = 2^{13} \cdot \left( \left( N_{symb}^{prsb} n_{hf} + \left( N_{symb}^{slot} n_{s,f}^{u} + l + 1 - s_{i} \right) \bmod N_{symb}^{prsb} + 1 \right) \cdot \left( 2 \cdot N_{\text{ID}}^{\text{PRS}} + 1 \right) \right) + N_{\text{ID}}^{\text{PRS}};$$

où $n_{s,f}^{u}$ est un indice de créneau dans une trame radio ; $l$ est un indice de symbole dans un créneau ; $N_{symb}^{prsb}$ est un nombre total de symboles inclus dans un bloc de ressources PRS ; $N_{symb}^{slot}$ est un nombre total de symboles inclus dans un créneau ; $n_{hf}$ représente un nombre d'une demi-trame, $n_{hf} = 0$ indique la première demi-trame d'une sous-trame et $n_{hf} = 1$ indique la demi-trame restante de la sous-trame ; $s_{i}$ est une position d'un premier symbole dans un bloc de ressources PRS correspondant ; $N_{\text{ID}}^{\text{PRS}} \in \{0, 1, ..., 8191\}$ est une identification PRS pour générer la valeur initiale ; et x est lié à un PRS dans le domaine temporel et est une valeur prédéfinie ;

$$N_{\text{CP}} = \begin{cases} 1 & \text{Normal CP} \\ 0 & \textit{Extended CP} \end{cases}.$$

**9.** Procédé selon la revendication 6, dans lequel
un signal envoyé par le dernier symbole dans le bloc de ressources PRS comprend les informations d'identification de bloc de ressources.

**10.** Procédé selon la revendication 9, dans lequel

une séquence r(m) envoyée par le dernier symbole dans le bloc de ressources PRS est générée de la manière suivante :

$$r_{l,n_s}(m) = \frac{1}{\sqrt{2}} \left( 1 - 2 \cdot c(2m) \right) + j \frac{1}{\sqrt{2}} \left( 1 - 2 \cdot c(2m+1) \right), \quad m = 0, 1, ..., x N_{\text{RB}}^{\text{max, DL}} - 1$$

dans lequel une valeur initiale $c_{\text{init}}$ d'une séquence c(i) est déterminée selon au moins l'un parmi :

$$c_{\text{init}} = 2^{26} \cdot \left\lfloor N_{\text{ID}}^{\text{PRS}}/256 \right\rfloor + 2^{20} \cdot i_{prs} + 2^{8} \cdot \left( \left( N_{symb}^{prsb} n_{hf} + \left( N_{symb}^{slot} n_{s,f}^{u} + l + 1 - s_{i} \right) \bmod N_{symb}^{prsb} + 1 \right) \cdot \left( 2 \cdot \left( N_{\text{ID}}^{\text{PRS}} \bmod 256 \right) + 1 \right) \right)$$
$$+ \left( N_{\text{ID}}^{\text{PRS}} \bmod 256 \right);$$

$$c_{\mathrm{init}} = 2^{25} \cdot \left\lfloor N_{\mathrm{ID}}^{\mathrm{PRS}}/128 \right\rfloor + 2^{19} \cdot i_{prs} + 2^{8} \cdot \left( \left( N_{symb}^{prsb} n_{hf} + \left( N_{symb}^{slot} n_{s,f}^{u} + l + 1 - s_i \right) \bmod N_{symb}^{prsb} + 1 \right) \cdot \left( 2 \cdot \left( N_{\mathrm{ID}}^{\mathrm{PRS}} \bmod 128 \right) + 1 \right) \right)$$
$$+ 2 \left( N_{\mathrm{ID}}^{\mathrm{PRS}} \bmod 128 \right) + N_{cp};$$

$$c_{init} = \left( 2^{13} \cdot \left( N_{symb}^{slot} n_{s,f}^{u} + l + 1 \right) \left( 2 N_{ID}^{PRS} + 1 \right) + N_{ID}^{PRS} \right) \bmod 2^{31};$$

$$c_{init} = \left( 2^{13} \cdot \left( i_{prs} + 1 \right) \cdot \left( 2 N_{ID}^{PRS} + 1 \right) + N_{ID}^{PRS} \right) \bmod 2^{31};$$

$$c_{init} = 2^{12} \left( i_{prs} + 1 \right) \cdot \left( 2 \left( N_{ID}^{PRS} \bmod 4096 \right) + 1 \right) + \left( N_{ID}^{PRS} \bmod 4096 \right);$$

$$c_{init} = 2^{13} \left( i_{prs} + 1 \right) \cdot \left( 2 \left( N_{ID}^{PRS} \bmod 4096 \right) + 1 \right) + 2 \left( N_{ID}^{PRS} \bmod 4096 \right) + N_{cp};$$

$$c_{init} = 2^{12} \left( i_{prs} + 1 \right) \left( \left\lfloor N_{ID}^{PRS} / N_{symb}^{prsb} \right\rfloor + 1 \right) + 2^{6} \left( i_{prs} + 1 \right) + \left( N_{ID}^{PRS} \bmod N_{symb}^{prsb} \right);$$

où $i_{prs}$ est un indice d'identification du bloc de ressources PRS et est inférieur ou égal à $N_{symb}^{prsb}$ ; $n_{s,f}^{u}$ est un indice de créneau dans une trame radio ; $l$ est un indice de symbole dans un créneau ; $N_{symb}^{prsb}$ est un nombre total de symboles inclus dans un bloc de ressources PRS; $N_{symb}^{slot}$ est un nombre total de symboles inclus dans un créneau ; $n_{hf}$ représente un nombre d'une demi-trame, $n_{hf} = 0$ indique la première demi-trame d'une sous-trame et $n_{hf} = 1$ indique la demi-trame restante de la sous-trame ; $s_i$ est une position d'un premier symbole dans un bloc de ressources PRS correspondant ; $N_{\mathrm{ID}}^{\mathrm{PRS}} \in \{0, 1, ..., 8191\}$ est une identification PRS pour générer la valeur initiale ; et x est lié à un PRS dans le domaine temporel et est une valeur prédéfinie ;

$$N_{\mathrm{CP}} = \begin{cases} 1 & \mathtt{Normal\ CP} \\ 0 & \mathit{Extended}\ \mathtt{CP} \end{cases}.$$

11. Procédé de réception pour recevoir des blocs de ressources de signal de référence de positionnement, PRS, le procédé étant réalisé par un nœud de réception, le procédé comprenant les étapes consistant à :

déterminer (201) des ressources temps-fréquence par l'intermédiaire desquelles des blocs de ressources PRS sont envoyés en fonction d'un espacement de sous-porteuses, dans lequel une position attribuée à un premier symbole dans chaque bloc de ressources PRS est différente pour un espacement de sous-porteuses différent ; et détecter et recevoir (202) les blocs de ressources PRS en fonction des ressources temps-fréquence déterminées, dans lequel chaque bloc de ressources PRS comprend des informations d'identification de bloc de ressources PRS.

12. Nœud de transmission, comprenant des moyens configurés pour réaliser le procédé selon l'une quelconque des revendications 1 à 10.

13. Support de stockage lisible par ordinateur comprenant des instructions qui, lorsqu'elles sont exécutées par un ordinateur, amènent l'ordinateur à réaliser le procédé selon l'une quelconque des revendications 1 à 10.

14. Nœud de réception, comprenant des moyens configurés pour réaliser le procédé selon la revendication 11.

15. Support de stockage lisible par ordinateur comprenant des instructions qui, lorsqu'elles sont exécutées par un ordinateur, amènent l'ordinateur à réaliser le procédé selon la revendication 11.

101

allocate time-frequency resources to PRS
resource blocks according to subcarrier spacing

102

transmit the PRS resource blocks according to
the allocated time-frequency resources, with
each PRS resource block including resource
block identification information

Fig. 1

Fig. 2

PRS sequence generated in
Mode One

PRS sequence including
resource block ID information
and generated in Mode Two

Fig. 3

PRS sequence generated in
Mode One

PRS sequence including
resource block ID information
and generated in Mode Two

Fig. 4

PRS sequence generated in
Mode One

PRS sequence including
resource block ID information
and generated in Mode Two

Fig. 5

PRS sequence generated in
Mode One

PRS sequence including
resource block ID information
and generated in Mode Two

Fig. 6

PRS sequence generated in
Mode One

PRS sequence including resource
block ID information and
generated in Mode Two

slot

Fig. 7

PRS sequence generated in
Mode One

PRS sequence including resource
block ID information and
generated in Mode Two

slot

Fig. 8

PRS sequence generated in
Mode One

PRS sequence including resource
block ID information and
generated in Mode Two

slot

Fig. 9

PRS sequence generated in
Mode One

PRS sequence including resource
block ID information and
generated in Mode Two

slot

Fig. 10

PRS sequence generated in
Mode One

PRS sequence including resource
block ID information and
generated in Mode Two

slot

Fig. 11

201

determine time-frequency resources via which
PRS resource blocks are transmitted according to
subcarrier spacing

202

detect and receive the PRS resource blocks
according to the determined time-frequency
resources, with each PRS resource block
including resource block ID information

Fig. 12

31

```
┌─────────────────────┐
│  Allocation module  │
└─────────────────────┘
           │
┌─────────────────────┐
│     Transmitting    │
│       module        │
└─────────────────────┘
```

32

Fig. 13

41

```
┌─────────────────────┐
│    Determination     │
│       module        │
└─────────────────────┘
           │
┌─────────────────────┐
│     Detecting and   │
│   receiving module  │
└─────────────────────┘
```

42

Fig. 14

52 51 53

Processor

Computer program

Memory

Transmitting node

Fig. 15

62 61 63

Processor

Computer program

Memory

Receiving node

Fig. 16

**REFERENCES CITED IN THE DESCRIPTION**

**Non-patent literature cited in the description**

- 3rd Generation Partnership Project; Technical Specification Group Radio Access Network; Evolved Universal Terrestrial Radio Access (E-UTRA); Physical channels and modulation (Release 15). *3GPP STANDARD; TECHNICAL SPECIFICATION; 3GPP TS 36.211*, 27 September 2018 (V15.3.0), 94-187

- **INTEL CORPORATION**. Summary for NR-Positioning AI - 7.2.10.1.1 DL only Based Positioning. *3GPP DRAFT; R1-1903394*, 26 February 2019